# EUROPEAN PATENT APPLICATION

(11) **EP 4 765 953 A1**
(43) Date of publication of application: **24.06.2026**
(21) Application number: 24857843.7
(22) Date of filing: 14.05.2024
(51) Int. Cl.: H04W 36/32, H04W 4/12

(54) **COMMUNICATION METHOD AND APPARATUS**

(30) Priority: 25.08.2023 CN 202311086622
(71) Applicant: HUAWEI TECHNOLOGIES CO., LTD., Shenzhen 518129 (CN)
(72) Inventor: LI, Jie, Shenzhen, Guangdong 518129 (CN); PENG, Wenjie, Shenzhen, Guangdong 518129 (CN)
(74) Representative: Pfenning, Meinig & Partner mbB
(86) International application number: PCT/CN2024/093195
(87) International publication number: WO 2025/044294

(57) **Abstract**

Embodiments of this application disclose a communication method and apparatus. The method includes: A first network device sends a first message to a second network device, where the first message includes movement path information of a terminal device; and the first network device receives a second message from the second network device, where the second message includes waypoint deviation tolerance information, and the waypoint deviation tolerance information indicates a distance range within which the terminal device is allowed to deviate from a movement path corresponding to the movement path information. According to embodiments of this application, restrictions of different network devices on sending of a movement path update indication message by the terminal device can be met, thereby improving communication flexibility.

## Description

This application claims priority to Chinese Patent Application No. 202311086622.6, filed with the China National Intellectual Property Administration on August 25, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

As a new type of aircraft, uncrewed aerial vehicles (uncrewed aerial vehicle, UAV) are becoming increasingly popular nowadays because of flexibility and convenience of the uncrewed aerial vehicles. In addition, cellular networks can provide uncrewed aerial vehicles with important features such as extensive coverage, high reliability, high security, and continuous mobility, and provide regulators with regulatory capabilities. The communication environment of the uncrewed aerial vehicles is greatly different from that of common terminal devices. The uncrewed aerial vehicles are mainly flying above base stations and connected to the base stations through Uu interfaces, primarily through line of sight (line of sight, LOS) communication. Therefore, the uncrewed aerial vehicles can receive signals from more base stations.

The 3rd generation partnership project (3rd generation partnership project, 3GPP) R16 introduces conditional handover (conditional handover, CHO), which is an enhancement to new radio (new radio, NR) basic handover. In a CHO scenario, when an uncrewed aerial vehicle performs communication in a flight process, how does a source base station configure message reporting restriction information is a problem.

### SUMMARY

Embodiments of this application provide a communication method and apparatus, to meet restrictions of different network devices on sending of a movement path update indication message by a terminal device, thereby improving communication flexibility.

According to a first aspect, an embodiment of this application provides a communication method. The method is applied to a first network device or a chip or circuit configured in the first network device, and the method includes:
sending a first message to a second network device, where the first message includes movement path information of a terminal device; and receiving a second message from the second network device, where the second message includes waypoint deviation tolerance information, and the waypoint deviation tolerance information indicates a distance range within which the terminal device is allowed to deviate from a movement path corresponding to the movement path information.

Because different second network devices have different waypoint deviation tolerance for the movement path, the first network device obtains waypoint deviation tolerance information of the different second network devices, to determine message reporting restriction information and send the message reporting restriction information to the terminal device, so as to meet restrictions of the different second network devices on a movement path update indication message, thereby improving communication flexibility.

In a possible design, the waypoint deviation tolerance information includes a first waypoint and a first distance threshold, the first waypoint is a waypoint in the movement path, and the first distance threshold is a distance threshold for the terminal device deviating from the first waypoint. The second network device may configure one first distance threshold for each waypoint in the movement path.

In a possible design, the waypoint deviation tolerance information includes a second distance threshold, and the second distance threshold is a distance threshold for the terminal device deviating from any waypoint in the movement path. The second network device configures one or more second distance thresholds for the movement path of the terminal device.

In a possible design, the message reporting restriction information is determined based on the waypoint deviation tolerance information; and the message reporting restriction information is sent to the terminal device, where the message reporting restriction information is used to restrict sending of the movement path update indication message by the terminal device. The message reporting restriction information is determined by obtaining the waypoint deviation tolerance information of the different second network devices, and the message reporting restriction information is sent to the terminal device, to meet the restrictions of the different second network devices on the movement path update indication message, thereby improving communication flexibility.

In a possible design, that the message reporting restriction information is determined based on the waypoint deviation tolerance information includes: selecting one piece of waypoint deviation tolerance information with lowest waypoint deviation tolerance from a plurality of pieces of received waypoint deviation tolerance information as the message reporting restriction information. The waypoint deviation tolerance information with the lowest waypoint deviation tolerance is selected as the message reporting restriction information, so that the message reporting restriction information meets the restrictions of the different second network devices on the movement path update indication message.

In a possible design, the second message further includes first indication information, and the first indication information indicates whether the second network device supports serving the terminal device. In a CHO scenario, the first network device sends the movement path information to the second network device, and the second network device determines whether a coverage area of the second network device supports serving the terminal device. The first network device determines, based on feedback from the second network device about whether the second network device supports serving the terminal device, a candidate target network device for performing conditional handover, to avoid sending, to the terminal device, a CHO configuration and a CHO handover condition of a network device that does not support serving the terminal device, thereby reducing signaling overheads and improving communication efficiency.

In a possible design, the second message further includes at least one waypoint, and the at least one waypoint is a waypoint that is in the movement path and that is in the coverage area of the second network device; or the second message further includes at least two waypoints and second indication information, and the second indication information indicates that the coverage area of the second network device is between the at least two waypoints. The waypoint in the coverage area of the second network device is indicated, or it indicates that the coverage area is between the at least two waypoints, so that the first network device can determine that the second network device supports serving the terminal device. In addition, the first network device determines a CHO handover condition of the candidate target network device based on the information included in the second message.

In a possible design, the first network device selects, from at least one second network device based on the second message, the candidate target network device for performing conditional handover CHO. The candidate target network device for performing conditional handover CHO is selected from the at least one second network device, to avoid sending, to the terminal device, the CHO configuration and the CHO handover condition of the network device that does not support serving the terminal device, so as to reduce signaling overheads and improve communication efficiency.

In a possible design, a CHO configuration and a CHO trigger condition of the candidate target network device are sent to the terminal device. The CHO configuration and the CHO trigger condition of the candidate target network device are sent to the terminal device, so that the terminal device completes conditional handover in a movement process, to ensure a success rate of conditional handover.

In a possible design, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device. When both an RSRP threshold and the location range of the candidate target network device are met, the terminal device performs handover from a cell of the first network device to a cell of the candidate target network device, to ensure the success rate of conditional handover.

In a possible design, the CHO trigger condition includes a time range, and the time range includes a first time point and first duration, where the first time point is a time point for entering the coverage area of the candidate target network device, and the first duration is duration for entering the coverage area of the candidate target network device. When both the RSRP threshold and the time range of the candidate target network device are met, the terminal device performs handover from the cell of the first network device to the cell of the candidate target network device, to ensure the success rate of conditional handover.

According to a second aspect, an embodiment of this application provides a communication method. The method is applied to a second network device or a chip or circuit configured in the second network device, and the method includes:
receiving a first message from a first network device, where the first message includes movement path information of a terminal device; and
sending a second message to the first network device, where the second message includes first waypoint deviation tolerance information, and the first waypoint deviation tolerance information indicates a distance range within which the terminal device is allowed to deviate from a movement path corresponding to the movement path information.

Because different second network devices have different waypoint deviation tolerance for the movement path, the first network device obtains waypoint deviation tolerance information of the different second network devices, to determine message reporting restriction information and send the message reporting restriction information to the terminal device, so as to meet restrictions of the different second network devices on a movement path update indication message, thereby improving communication flexibility.

In a possible design, the first waypoint deviation tolerance information includes a first waypoint and a first distance threshold, the first waypoint is a waypoint in the movement path, and the first distance threshold is a distance deviating from the first waypoint. The second network device may configure one first distance threshold for each waypoint in the movement path.

In a possible design, the first waypoint deviation tolerance information includes a second distance threshold, and the second distance threshold is a distance for the terminal device deviating from any waypoint in the movement path. The second network device configures one or more second distance thresholds for the movement path of the terminal device.

In a possible design, the second message further includes first indication information, and the first indication information indicates whether the second network device supports serving the terminal device. In a CHO scenario, the first network device sends the movement path information to the second network device, and the second network device determines whether a coverage area of the second network device supports serving the terminal device. The first network device determines, based on feedback from the second network device about whether the second network device supports serving the terminal device, a candidate target network device for performing conditional handover, to avoid sending, to the terminal device, a CHO configuration and a CHO handover condition of a network device that does not support serving the terminal device, thereby reducing signaling overheads and improving communication efficiency.

In a possible design, the second message further includes at least one waypoint, and the at least one waypoint is a waypoint that is in the movement path and that is in the coverage area of the second network device; or the second message further includes at least two waypoints and second indication information, and the second indication information indicates that the coverage area of the second network device is between the at least two waypoints. The waypoint in the coverage area of the second network device is indicated, or it indicates that the coverage area is between the at least two waypoints, so that the first network device can determine that the second network device supports serving the terminal device. In addition, the first network device determines a CHO handover condition of the candidate target network device based on the information included in the second message.

In a possible design, a third message is sent to a third network device, where the third message includes the movement path information; and a fourth message is received from the third network device, where the fourth message includes second waypoint deviation tolerance information, and the second waypoint deviation tolerance information indicates a distance range within which the terminal device is allowed to deviate from the movement path corresponding to the movement path information. In a multi-hop scenario, the second network device obtains waypoint deviation tolerance information of more network devices.

In a possible design, a fifth message is sent to the first network device, where the fifth message includes the second waypoint deviation tolerance information. More waypoint deviation tolerance information of different network devices is obtained, so that accuracy of determining the message reporting restriction information is improved.

According to a third aspect, an embodiment of this application provides a communication method. The method is applied to a terminal device or a chip or circuit configured in the terminal device, and the method includes:
receiving message reporting restriction information from a first network device, where the message reporting restriction information is determined based on waypoint deviation tolerance information, and the waypoint deviation tolerance information indicates a distance range within which the terminal device is allowed to deviate from a movement path corresponding to movement path information; and when a movement status of the terminal device meets the message reporting restriction information, sending a movement path update indication message.

Because different second network devices have different waypoint deviation tolerance for the movement path, the first network device obtains waypoint deviation tolerance information of the different second network devices, to determine the message reporting restriction information. When the message reporting restriction information is met, the terminal device sends the movement path update indication message, to meet restrictions of different second network devices on the movement path update indication message, thereby improving communication flexibility.

In a possible design, a conditional handover CHO configuration and a CHO trigger condition of a candidate target network device are received from the first network device, where the candidate target network device is a second network device that supports serving the terminal device; and conditional handover is performed based on the CHO configuration and the CHO trigger condition. The CHO configuration and the CHO trigger condition of the candidate target network device are received, so that the terminal device completes conditional handover in a movement process, to ensure a success rate of conditional handover.

In a possible design, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device.

When the terminal device enters the coverage area of the candidate target network device by passing over the second waypoint, and the terminal device measures that signal quality of the candidate target network device meets a first threshold, handover is performed from a cell of the first network device to a cell of the candidate target network device through the CHO configuration. When both an RSRP threshold and the location range of the candidate target network device are met, handover is performed from the cell of the first network device to the cell of the candidate target network device, to ensure the success rate of conditional handover.

In a possible design, the CHO trigger condition includes a time range, and the time range includes a first time point and first duration, where the first time point is a time point for entering the coverage area of the candidate target network, and the first duration is duration for entering the coverage area of the candidate target network device.

When the terminal device enters the coverage area of the candidate target network device at the first time point, and measures, within the first duration, that the signal quality of the candidate target network device meets the first threshold, handover is performed from the cell of the first network device to the cell of the candidate target network device through the CHO configuration. When both the RSRP threshold and the time range of the candidate target network device are met, handover is performed from the cell of the first network device to the cell of the candidate target network device, to ensure the success rate of conditional handover.

According to a fourth aspect, an embodiment of this application provides a communication method. The method is applied to a first network device or a chip or circuit configured in the first network device, and the method includes:

The first network device sends a first message to a second network device, where the first message includes movement path information of a terminal device; and
the first network device receives a second message from the second network device, where the second message includes first indication information, and the first indication information indicates whether the second network device supports serving the terminal device.

In a CHO scenario, the first network device sends the movement path information to the second network device, and the second network device determines whether a coverage area of the second network device supports serving the terminal device. The first network device determines, based on feedback from the second network device about whether the second network device supports serving the terminal device, a candidate target network device for performing conditional handover, to avoid sending, to the terminal device, a CHO configuration and a CHO handover condition of a network device that does not support serving the terminal device, thereby reducing signaling overheads and improving communication efficiency.

In a possible design, the second message further includes at least one waypoint, and the at least one waypoint is a waypoint that is in a movement path and that is in the coverage area of the second network device; or the second message further includes at least two waypoints and second indication information, and the second indication information indicates that the coverage area of the second network device is between the at least two waypoints. The waypoint in the coverage area of the second network device is indicated, or it indicates that the coverage area is between the at least two waypoints, so that the first network device can determine that the second network device supports serving the terminal device. In addition, the first network device determines a CHO handover condition of the candidate target network device based on the information included in the second message.

In a possible design, the candidate target network device for performing conditional handover CHO is selected from at least one second network device based on the second message. The candidate target network device for performing conditional handover CHO is selected from the at least one second network device, to avoid sending, to the terminal device, the CHO configuration and the CHO handover condition of the network device that does not support serving the terminal device, so as to reduce signaling overheads and improve communication efficiency.

In a possible design, a CHO configuration and a CHO trigger condition of the candidate target network device are sent to the terminal device. The CHO configuration and the CHO trigger condition of the candidate target network device are sent to the terminal device, so that the terminal device completes conditional handover in a movement process, to ensure a success rate of conditional handover.

In a possible design, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device. When both an RSRP threshold and the location range of the candidate target network device are met, the terminal device performs handover from a cell of the first network device to a cell of the candidate target network device, to ensure the success rate of conditional handover.

In a possible design, the CHO trigger condition includes a time range, and the time range includes a first time point and first duration, where the first time point is a time point for entering the coverage area of the candidate target network device, and the first duration is duration for entering the coverage area of the candidate target network device. When both the RSRP threshold and the time range of the candidate target network device are met, the terminal device performs handover from the cell of the first network device to the cell of the candidate target network device, to ensure the success rate of conditional handover.

In a possible design, the second message includes waypoint deviation tolerance information, and the waypoint deviation tolerance information indicates a distance range within which the terminal device is allowed to deviate from the movement path corresponding to the movement path information. Because different second network devices have different waypoint deviation tolerance for the movement path, the first network device obtains waypoint deviation tolerance information of the different second network devices, to determine message reporting restriction information and send the message reporting restriction information to the terminal device, so as to meet restrictions of the different second network devices on a movement path update indication message, thereby improving communication flexibility.

In a possible design, the waypoint deviation tolerance information includes a first waypoint and a first distance threshold, the first waypoint is a waypoint in the movement path, and the first distance threshold is a distance threshold for the terminal device deviating from the first waypoint. The second network device may configure one first distance threshold for each waypoint in the movement path.

In a possible design, the waypoint deviation tolerance information includes a second distance threshold, and the second distance threshold is a distance threshold for the terminal device deviating from any waypoint in the movement path. The second network device configures one or more second distance thresholds for the movement path of the terminal device.

In a possible design, the first network device determines the message reporting restriction information based on the waypoint deviation tolerance information, and sends the message reporting restriction information to the terminal device, where the message reporting restriction information is used to restrict sending of the movement path update indication message by the terminal device. The message reporting restriction information is determined by obtaining the waypoint deviation tolerance information of the different second network devices, and the message reporting restriction information is sent to the terminal device, to meet the restrictions of the different second network devices on the movement path update indication message, thereby improving communication flexibility.

In a possible design, one piece of waypoint deviation tolerance information with lowest waypoint deviation tolerance is selected from a plurality of pieces of received waypoint deviation tolerance information as the message reporting restriction information. The waypoint deviation tolerance information with the lowest waypoint deviation tolerance is selected as the message reporting restriction information, so that the message reporting restriction information meets the restrictions of the different second network devices on the movement path update indication message.

According to a fifth aspect, an embodiment of this application provides a communication method. The method is applied to a second network device or a chip or circuit configured in the second network device, and the method includes:
receiving a first message from a first network device, where the first message includes movement path information of a terminal device; and sending a second message to the first network device, where the second message includes first indication information, and the first indication information indicates whether the second network device supports serving the terminal device.

In a CHO scenario, the first network device sends the movement path information to the second network device, and the second network device determines whether a coverage area of the second network device supports serving the terminal device. The first network device determines, based on feedback from the second network device about whether the second network device supports serving the terminal device, a candidate target network device for performing conditional handover, to avoid sending, to the terminal device, a CHO configuration and a CHO handover condition of a network device that does not support serving the terminal device, thereby reducing signaling overheads and improving communication efficiency.

In a possible design, the second message further includes at least one waypoint, and the at least one waypoint is a waypoint that is in a movement path and that is in the coverage area of the second network device; or the second message further includes at least two waypoints and second indication information, and the second indication information indicates that the coverage area of the second network device is between the at least two waypoints. The waypoint in the coverage area of the second network device is indicated, or it indicates that the coverage area is between the at least two waypoints, so that the first network device can determine that the second network device supports serving the terminal device. In addition, the first network device determines a CHO handover condition of the candidate target network device based on the information included in the second message.

In a possible design, the second message further includes first waypoint deviation tolerance information, and the first waypoint deviation tolerance information indicates a distance range within which the terminal device is allowed to deviate from the movement path corresponding to the movement path information. Because different second network devices have different waypoint deviation tolerance for the movement path, the first network device obtains waypoint deviation tolerance information of the different second network devices, to determine message reporting restriction information and send the message reporting restriction information to the terminal device, so as to meet restrictions of the different second network devices on a movement path update indication message, thereby improving communication flexibility.

In a possible design, the first waypoint deviation tolerance information includes a first waypoint and a first distance threshold, the first waypoint is a waypoint in the movement path, and the first distance threshold is a distance deviating from the first waypoint. The second network device may configure one first distance threshold for each waypoint in the movement path.

In a possible design, the first waypoint deviation tolerance information includes a second distance threshold, and the second distance threshold is a distance for the terminal device deviating from any waypoint in the movement path. The second network device configures one or more second distance thresholds for the movement path of the terminal device.

In a possible design, a third message is sent to a third network device, where the third message includes the movement path information; and a fourth message is received from the third network device, where the fourth message includes third indication information, and the third indication information indicates whether the third network device supports serving the terminal device. In a multi-hop scenario, the second network device obtains whether more network devices support serving the terminal device.

In a possible design, a fifth message is sent to the first network device, where the fifth message includes the third indication information. Whether more different network devices support serving the terminal device is obtained, so that a success rate of performing conditional handover by the terminal device in a movement process is increased.

According to a sixth aspect, an embodiment of this application provides a communication method. The method is applied to a terminal device or a chip or circuit configured in the terminal device, and the method includes:
receiving a conditional handover CHO configuration and a CHO trigger condition of a candidate target network device from a first network device, where the candidate target network device is a second network device that supports serving the terminal device; and performing conditional handover based on the CHO configuration and the CHO trigger condition.

The CHO configuration and the CHO trigger condition of the candidate target network device that supports serving the terminal device are received, so that a success rate of conditional handover is ensured.

In a possible design, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device.

When the terminal device enters the coverage area of the candidate target network device by passing over the second waypoint, and the terminal device measures that signal quality of the candidate target network device meets a first threshold, handover is performed from a cell of the first network device to a cell of the candidate target network device through the CHO configuration. When both an RSRP threshold and the location range of the candidate target network device are met, handover is performed from the cell of the first network device to the cell of the candidate target network device, to ensure the success rate of conditional handover.

In a possible design, the CHO trigger condition includes a time range, and the time range includes a first time point and first duration, where the first time point is a time point for entering the coverage area of the candidate target network, and the first duration is duration for entering the coverage area of the candidate target network device.

When the terminal device enters the coverage area of the candidate target network device at the first time point, and measures, within the first duration, that the signal quality of the candidate target network device meets the first threshold, handover is performed from the cell of the first network device to the cell of the candidate target network device through the CHO configuration. When both the RSRP threshold and the time range of the candidate target network device are met, handover is performed from the cell of the first network device to the cell of the candidate target network device, to ensure the success rate of conditional handover.

In a possible design, the terminal device receives message reporting restriction information from the first network device, where the message reporting restriction information is determined based on waypoint deviation tolerance information, and the waypoint deviation tolerance information indicates a distance range within which the terminal device is allowed to deviate from a movement path corresponding to movement path information; and when a movement status of the terminal device meets the message reporting restriction information, the terminal device sends a movement path update indication message.

Because different second network devices have different waypoint deviation tolerance for the movement path, the first network device obtains waypoint deviation tolerance information of the different second network devices, to determine the message reporting restriction information. When the message reporting restriction information is met, the terminal device sends the movement path update indication message, to meet restrictions of different second network devices on the movement path update indication message, thereby improving communication flexibility.

According to a seventh aspect, an embodiment of this application provides a communication apparatus. The communication apparatus includes:
a sending module, configured to send a first message to a second network device, where the first message includes movement path information of a terminal device; and
a receiving module, configured to receive a second message from the second network device, where the second message includes waypoint deviation tolerance information, and the waypoint deviation tolerance information indicates a distance range within which the terminal device is allowed to deviate from a movement path corresponding to the movement path information.

In a possible design, the waypoint deviation tolerance information includes a first waypoint and a first distance threshold, the first waypoint is a waypoint in the movement path, and the first distance threshold is a distance threshold for the terminal device deviating from the first waypoint.

In a possible design, the waypoint deviation tolerance information includes a second distance threshold, and the second distance threshold is a distance threshold for the terminal device deviating from any waypoint in the movement path.

In a possible design, a processing module is configured to determine message reporting restriction information based on the waypoint deviation tolerance information; and
the sending module is configured to send the message reporting restriction information to the terminal device, where the message reporting restriction information is used to restrict sending of a movement path update indication message by the terminal device.

In a possible design, the processing module is configured to select one piece of waypoint deviation tolerance information with lowest waypoint deviation tolerance from a plurality of pieces of received waypoint deviation tolerance information as the message reporting restriction information.

In a possible design, the second message further includes first indication information, and the first indication information indicates whether the second network device supports serving the terminal device.

In a possible design, the second message further includes at least one waypoint, and the at least one waypoint is a waypoint that is in the movement path and that is in a coverage area of the second network device; or the second message further includes at least two waypoints and second indication information, and the second indication information indicates that the coverage area of the second network device is between the at least two waypoints.

In a possible design, the processing module is configured to select, from at least one second network device based on the second message, a candidate target network device for performing conditional handover CHO.

In a possible design, the sending module is configured to send a CHO configuration and a CHO trigger condition of the candidate target network device to the terminal device.

In a possible design, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device.

In a possible design, the CHO trigger condition includes a time range, and the time range includes a first time point and first duration, where the first time point is a time point for entering the coverage area of the candidate target network device, and the first duration is duration for entering the coverage area of the candidate target network device.

For operations performed by the communication apparatus and beneficial effects thereof, refer to the method according to the first aspect and the beneficial effects thereof. Repeated parts are not described again.

According to an eighth aspect, an embodiment of this application provides a communication apparatus. The communication apparatus includes:
a receiving module, configured to receive a first message from a first network device, where the first message includes movement path information of a terminal device; and
a sending module, configured to send a second message to the first network device, where the second message includes first waypoint deviation tolerance information, and the first waypoint deviation tolerance information indicates a distance range within which the terminal device is allowed to deviate from a movement path corresponding to the movement path information.

In a possible design, the first waypoint deviation tolerance information includes a first waypoint and a first distance threshold, the first waypoint is a waypoint in the movement path, and the first distance threshold is a distance deviating from the first waypoint.

In a possible design, the first waypoint deviation tolerance information includes a second distance threshold, and the second distance threshold is a distance for the terminal device deviating from any waypoint in the movement path.

In a possible design, the second message further includes first indication information, and the first indication information indicates whether the second network device supports serving the terminal device.

In a possible design, the second message further includes at least one waypoint, and the at least one waypoint is a waypoint that is in the movement path and that is in a coverage area of the second network device; or the second message further includes at least two waypoints and second indication information, and the second indication information indicates that the coverage area of the second network device is between the at least two waypoints.

In a possible design, the sending module is further configured to send a third message to a third network device, where the third message includes the movement path information; and the receiving module is further configured to receive a fourth message from the third network device, where the fourth message includes second waypoint deviation tolerance information, and the second waypoint deviation tolerance information indicates a distance range within which the terminal device is allowed to deviate from the movement path corresponding to the movement path information.

In a possible design, the sending module is further configured to send a fifth message to the first network device, where the fifth message includes the second waypoint deviation tolerance information.

For operations performed by the communication apparatus and beneficial effects thereof, refer to the method according to the second aspect and the beneficial effects thereof. Repeated parts are not described again.

According to a ninth aspect, an embodiment of this application provides a communication apparatus. The communication apparatus includes:
a receiving module, configured to receive message reporting restriction information from a first network device, where the message reporting restriction information is determined based on waypoint deviation tolerance information, and the waypoint deviation tolerance information indicates a distance range within which a terminal device is allowed to deviate from a movement path corresponding to movement path information; and
a sending module, configured to: when a movement status of the terminal device meets the message reporting restriction information, send a movement path update indication message.

In a possible design, the receiving module is configured to receive a conditional handover CHO configuration and a CHO trigger condition of a candidate target network device from the first network device, where the candidate target network device is a second network device that supports serving the terminal device; and
a processing module is configured to perform conditional handover based on the CHO configuration and the CHO trigger condition.

In a possible design, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device.

The processing module is configured to: when the terminal device enters the coverage area of the candidate target network device by passing over the second waypoint, and the terminal device measures that signal quality of the candidate target network device meets a first threshold, perform handover from a cell of the first network device to a cell of the candidate target network device through the CHO configuration.

In a possible design, the CHO trigger condition includes a time range, and the time range includes a first time point and first duration, where the first time point is a time point for entering the coverage area of the candidate target network, and the first duration is duration for entering the coverage area of the candidate target network device.

The processing module is configured to: when the terminal device enters the coverage area of the candidate target network device at the first time point, and measures, within the first duration, that the signal quality of the candidate target network device meets the first threshold, perform handover from the cell of the first network device to the cell of the candidate target network device through the CHO configuration.

For operations performed by the communication apparatus and beneficial effects thereof, refer to the method according to the third aspect and the beneficial effects thereof. Repeated parts are not described again.

According to a tenth aspect, an embodiment of this application provides a communication apparatus. The communication apparatus includes:
a sending module, configured to send a first message to a second network device, where the first message includes movement path information of a terminal device; and
a receiving module, configured to receive a second message from the second network device, where the second message includes first indication information, and the first indication information indicates whether the second network device supports serving the terminal device.

In a possible design, the second message further includes at least one waypoint, and the at least one waypoint is a waypoint that is in a movement path and that is in a coverage area of the second network device; or the second message further includes at least two waypoints and second indication information, and the second indication information indicates that the coverage area of the second network device is between the at least two waypoints.

In a possible design, a processing module is configured to select, from at least one second network device based on the second message, a candidate target network device for performing conditional handover CHO.

In a possible design, the sending module is configured to send a CHO configuration and a CHO trigger condition of the candidate target network device to the terminal device.

In a possible design, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device.

In a possible design, the CHO trigger condition includes a time range, and the time range includes a first time point and first duration, where the first time point is a time point for entering the coverage area of the candidate target network device, and the first duration is duration for entering the coverage area of the candidate target network device.

In a possible design, the second message includes waypoint deviation tolerance information, and the waypoint deviation tolerance information indicates a distance range within which the terminal device is allowed to deviate from the movement path corresponding to the movement path information.

In a possible design, the waypoint deviation tolerance information includes a first waypoint and a first distance threshold, the first waypoint is a waypoint in the movement path, and the first distance threshold is a distance threshold for the terminal device deviating from the first waypoint.

In a possible design, the waypoint deviation tolerance information includes a second distance threshold, and the second distance threshold is a distance threshold for the terminal device deviating from any waypoint in the movement path.

In a possible design, the processing module is configured to determine message reporting restriction information based on the waypoint deviation tolerance information; and
the sending module is configured to send the message reporting restriction information to the terminal device, where the message reporting restriction information is used to restrict sending of a movement path update indication message by the terminal device.

In a possible design, the processing module is configured to select one piece of waypoint deviation tolerance information with lowest waypoint deviation tolerance from a plurality of pieces of received waypoint deviation tolerance information as the message reporting restriction information.

For operations performed by the communication apparatus and beneficial effects thereof, refer to the method according to the fourth aspect and the beneficial effects thereof. Repeated parts are not described again.

According to an eleventh aspect, an embodiment of this application provides a communication apparatus. The communication apparatus includes:
a receiving module, configured to receive a first message from a first network device, where the first message includes movement path information of a terminal device; and
a sending module, configured to send a second message to the first network device, where the second message includes first indication information, and the first indication information indicates whether the second network device supports serving the terminal device.

In a possible design, the second message further includes at least one waypoint, and the at least one waypoint is a waypoint that is in a movement path and that is in a coverage area of the second network device; or the second message further includes at least two waypoints and second indication information, and the second indication information indicates that the coverage area of the second network device is between the at least two waypoints.

In a possible design, the second message further includes first waypoint deviation tolerance information, and the first waypoint deviation tolerance information indicates a distance range within which the terminal device is allowed to deviate from the movement path corresponding to the movement path information.

In a possible design, the first waypoint deviation tolerance information includes a first waypoint and a first distance threshold, the first waypoint is a waypoint in the movement path, and the first distance threshold is a distance deviating from the first waypoint.

In a possible design, the first waypoint deviation tolerance information includes a second distance threshold, and the second distance threshold is a distance for the terminal device deviating from any waypoint in the movement path.

In a possible design, the sending module is configured to send a third message to a third network device, where the third message includes the movement path information; and
the receiving module is configured to receive a fourth message from the third network device, where the fourth message includes third indication information, and the third indication information indicates whether the third network device supports serving the terminal device.

In a possible design, the sending module is configured to send a fifth message to the first network device, where the fifth message includes the third indication information.

For operations performed by the communication apparatus and beneficial effects thereof, refer to the method according to the fifth aspect and the beneficial effects thereof. Repeated parts are not described again.

According to a twelfth aspect, an embodiment of this application provides a communication apparatus. The communication apparatus includes:
a receiving module, configured to receive a conditional handover CHO configuration and a CHO trigger condition of a candidate target network device from a first network device, where the candidate target network device is a second network device that supports serving a terminal device; and
a processing module, configured to perform conditional handover based on the CHO configuration and the CHO trigger condition.

In a possible design, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device.

The processing module is configured to: when the terminal device enters the coverage area of the candidate target network device by passing over the second waypoint, and the terminal device measures that signal quality of the candidate target network device meets a first threshold, perform handover from a cell of the first network device to a cell of the candidate target network device through the CHO configuration.

In a possible design, the CHO trigger condition includes a time range, and the time range includes a first time point and first duration, where the first time point is a time point for entering the coverage area of the candidate target network, and the first duration is duration for entering the coverage area of the candidate target network device.

The processing module is configured to: when the terminal device enters the coverage area of the candidate target network device at the first time point, and measures, within the first duration, that the signal quality of the candidate target network device meets the first threshold, perform handover from the cell of the first network device to the cell of the candidate target network device through the CHO configuration.

In a possible design, the receiving module is configured to receive message reporting restriction information from the first network device, where the message reporting restriction information is determined based on waypoint deviation tolerance information, and the waypoint deviation tolerance information indicates a distance range within which the terminal device is allowed to deviate from a movement path corresponding to movement path information; and
a sending module is configured to: when a movement status of the terminal device meets the message reporting restriction information, send a movement path update indication message.

For operations performed by the communication apparatus and beneficial effects thereof, refer to the method according to the sixth aspect and the beneficial effects thereof. Repeated parts are not described again.

According to a thirteenth aspect, this application provides a communication apparatus. The communication apparatus includes a processor and a memory. The memory is configured to store a computer program. The processor is configured to execute the computer program stored in the memory, to cause the communication apparatus to perform the method according to any one of the first aspect and the fourth aspect.

According to a fourteenth aspect, this application provides a communication apparatus. The communication apparatus includes a processor and a memory. The memory is configured to store a computer program. The processor is configured to execute the computer program stored in the memory, to cause the communication apparatus to perform the method according to any one of the second aspect and the fifth aspect.

According to a fifteenth aspect, this application provides a communication apparatus. The communication apparatus includes a processor and a memory. The memory is configured to store a computer program. The processor is configured to execute the computer program stored in the memory, to cause the communication apparatus to perform the method according to any one of the third aspect and the sixth aspect.

According to a sixteenth aspect, this application provides a communication apparatus. The apparatus may be a first network device, may be an apparatus in the first network device, or may be an apparatus that can be used in combination with the first network device. The communication apparatus may alternatively be a chip system. The communication apparatus may perform the methods according to the first aspect and the fourth aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effects thereof, refer to the methods according to the first aspect and the fourth aspect, and the beneficial effects thereof. Repeated parts are not described again.

According to a seventeenth aspect, this application provides a communication apparatus. The apparatus may be a second network device, an apparatus in the second network device, or an apparatus that can be used in combination with the second network device. The communication apparatus may alternatively be a chip system. The communication apparatus may perform the methods according to the second aspect and the fifth aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effects thereof, refer to the methods according to the second aspect and the fifth aspect, and the beneficial effects thereof. Repeated parts are not described again.

According to an eighteenth aspect, this application provides a communication apparatus. The apparatus may be a terminal device, an apparatus in the terminal device, or an apparatus that can be used in combination with the terminal device. The communication apparatus may alternatively be a chip system. The communication apparatus may perform the methods according to the first aspect, the third aspect, and the sixth aspect. A function of the communication apparatus may be implemented by hardware, or may be implemented by hardware executing corresponding software. The hardware or the software includes one or more modules corresponding to the function. The module may be software and/or hardware. For operations performed by the communication apparatus and beneficial effects thereof, refer to the methods according to the third aspect and the sixth aspect, and the beneficial effects thereof. Repeated parts are not described again.

According to a nineteenth aspect, this application provides a computer-readable storage medium. The computer-readable storage medium is configured to store a computer program, and when the computer program is executed, the method according to any one of the first aspect to the sixth aspect is implemented.

According to a twentieth aspect, this application provides a computer program product including a computer program. When the computer program is executed, the method according to any one of the first aspect to the sixth aspect is implemented.

According to a twenty-first aspect, an embodiment of this application provides a communication system. The communication system includes at least one terminal device and at least one network device. The terminal device is configured to perform the steps in the third aspect and the sixth aspect. The network device is configured to perform the steps in the first aspect, the second aspect, the fourth aspect, and the fifth aspect.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of an architecture of a communication system according to an embodiment of this application;
FIG. 2 is a diagram of a communication interface;
FIG. 3 is a diagram of a flight path;
FIG. 4a is a diagram of NR basic handover;
FIG. 4b is a diagram of another NR basic handover;
FIG. 5 is a diagram of CHO handover;
FIG. 6 is a schematic flowchart of a communication method according to an embodiment of this application;
FIG. 7 is a diagram of waypoints according to an embodiment of this application;
FIG. 8 is another diagram of waypoints according to an embodiment of this application;
FIG. 9 is a schematic flowchart of a communication method according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of a network device according to an embodiment of this application; and
FIG. 13 is a diagram of a structure of a terminal device according to an embodiment of this application.

### DESCRIPTION OF EMBODIMENTS

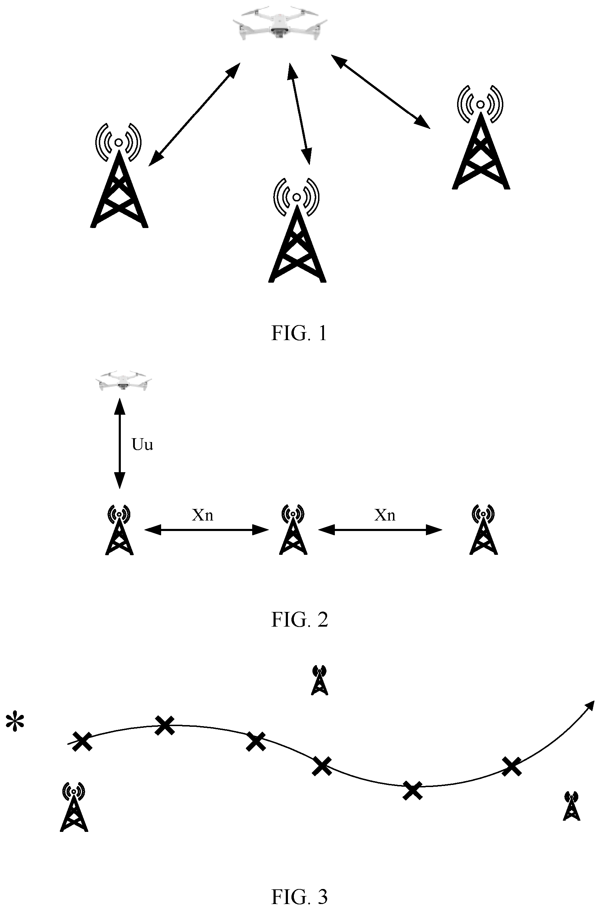

FIG. 1 is a diagram of an architecture of a communication system according to an embodiment of this application. The communication system may include a network device and a terminal device. The network device may include a source base station and a neighboring base station. The neighboring base station is a base station adjacent to the source base station. The terminal device may be located in a coverage area of one or more serving cells provided by the network device. When there are a plurality of cells serving the terminal device, the terminal device may work in a carrier aggregation (carrier aggregation, CA), dual connectivity (dual Connectivity, DC), or coordinated multi-point transmission manner. The one or more serving cells provide at least one parameter set (numerology), and provide a radio resource for the terminal device.

The terminal device may be referred to as user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, examples of some terminals are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), and a wireless terminal in smart home (smart home). The following uses an example in which the terminal device is an uncrewed aerial vehicle for description.

The network device is a radio access network (radio access network, RAN) node (or device) that connects the terminal device to a wireless network, and may also be referred to as a base station. Currently, examples of some RAN nodes are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), and a wireless fidelity (wireless fidelity, Wi-Fi) access point (access point, AP). In addition, in a network structure, an access network device may include a central unit (central unit, CU) node, a distributed unit (distributed unit, DU) node, or a RAN device including the CU node and the DU node. The RAN device including the CU node and the DU node separates protocol layers of an eNB in a long term evolution (long term evolution, LTE) system. Functions of some protocol layers are centrally controlled by the CU, functions of some or all of the remaining protocol layers are distributed in the DU, and the CU centrally controls the DU.

FIG. 2 is a diagram of a communication interface. A terminal device may communicate with a network device through a Uu interface. An interface for interconnection between network devices is referred to as an Xn interface, and the Xn interface supports signaling information exchange between two network devices. From a logical perspective, the Xn interface is a point-to-point interface between two network devices. Even if there is no physical direct connection between the two network devices, the point-to-point logical interface is feasible.

The communication system may be used in a long term evolution (long term evolution, LTE) system, a universal mobile telecommunications system (universal mobile telecommunications system, UMTS), a code division multiple access (code division multiple access, CDMA) system, a wireless local area network (wireless local area network, WLAN), a 5th generation (5th generation, 5G) mobile communication system, a next generation wireless communication system, or the like.

FIG. 3 is a diagram of a flight path. When executing a corresponding task, for example, performing power network inspection, an uncrewed aerial vehicle may fly along a fixed path. The path may be referred to as a flight path of the uncrewed aerial vehicle. In new radio (new radio, NR), reporting of the flight path of the uncrewed aerial vehicle is supported in a protocol. The flight path of the uncrewed aerial vehicle may be represented by planned waypoint information (an expected arrival location) and a corresponding timestamp (optional). A maximum quantity of waypoints in the flight path is 20. In addition, update of the flight path of the uncrewed aerial vehicle is further supported in a standard. To be specific, when the flight path of the UAV changes, a flight path update indication message may be first sent to a base station, to notify the base station that the flight path is updated. If the base station needs to update the flight path, the base station sends a flight path request message to the uncrewed aerial vehicle, to request the uncrewed aerial vehicle to report the flight path.

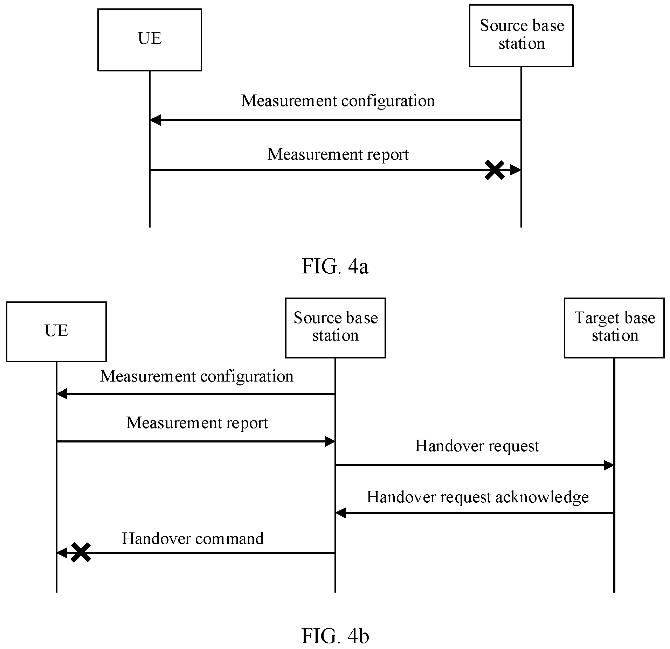

In conventional NR basic handover, in a movement process of a terminal device, a signal of a base station may be measured. If it is measured that signal quality of a target base station is better than signal quality of a source base station, the terminal device may perform handover from a cell covered by the source base station to a cell covered by the target base station. However, due to deterioration of a radio environment between UE and the source base station, a measurement report of the UE cannot reach the base station. As shown in FIG. 4a, the source base station sends a measurement configuration to the UE, and the UE sends a measurement report to the source base station after measuring a signal. However, because the radio environment deteriorates, the source base station cannot receive the measurement report reported by the UE. Alternatively, after the source base station receives the measurement report, a handover command delivered to the UE cannot reach the UE. As shown in FIG. 4b, the source base station sends a handover request to the target base station, and then the target base station sends a handover request acknowledge to the source base station. After receiving the handover request acknowledge, the source base station sends a handover command to the UE. However, because the radio environment deteriorates, the UE cannot receive the handover command sent by the source base station. In both cases, the handover fails, and the UE recognizes a radio link failure and initiates an RRC re-establishment process.

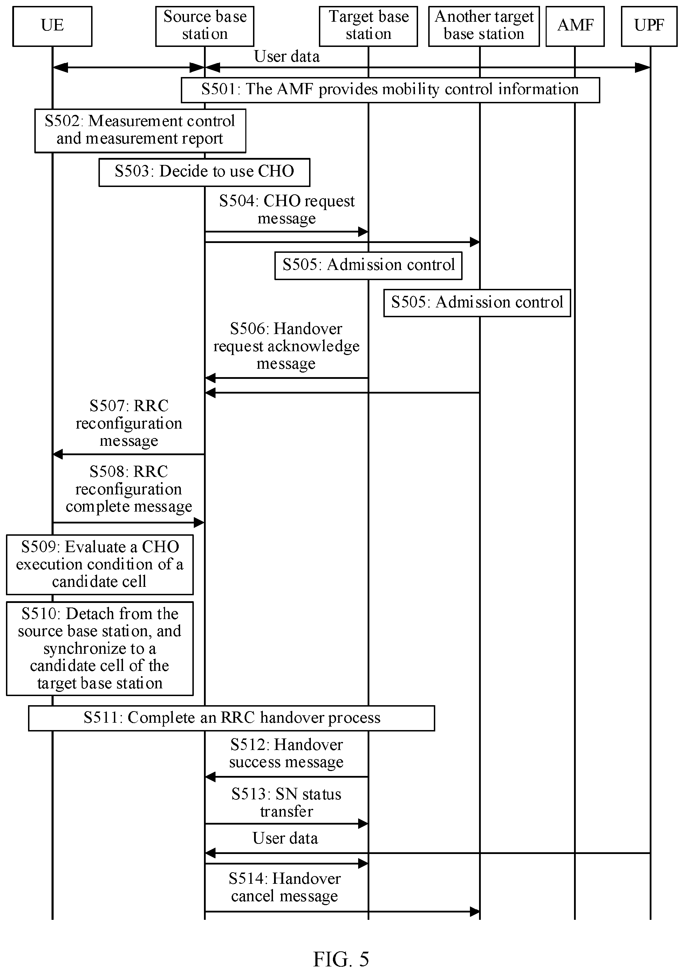

To lower a probability of the NR basic handover, the 3rd generation partnership project (3rd generation partnership project, 3GPP) R16 introduces CHO, which is an enhancement to the NR basic handover. The CHO may be understood as follows: Before the radio environment between the UE and the source base station further deteriorates, the source base station sends a handover command (carrying CHO configurations and CHO trigger conditions of candidate target base stations) to the UE in advance, so that the UE knows in advance how to connect to the target base station, and after the UE finds a base station whose CHO trigger condition is met in the candidate target base stations, the UE may independently decide to initiate handover. This increases a message transmission success opportunity, thereby greatly increasing a handover success rate. FIG. 5 is a diagram of CHO handover. The CHO procedure is as follows:
S501: An access and mobility management function (access and mobility management, AMF) provides mobility control information.
S502: UE exchanges measurement control and a measurement report with a source base station.
S503: The source base station decides to use CHO.
S504: The source base station sends a CHO request (handover request) message to a plurality of target base stations, where the request message is used to request CHO of one or more candidate cells that belong to one or more target base stations, and the plurality of target base stations include a candidate base station and another target base station.
S505: Each target base station performs admission control (admission control).
S506: Each target base station sends a handover request acknowledge (handover request acknowledge) message to the source base station, where the handover request acknowledge message includes a CHO configuration of the candidate cell, and the handover request acknowledge message is a CHO response message sent by each target base station.
S507: The source base station sends an RRC reconfiguration (RRC reconfiguration) message to the UE, where the RRC reconfiguration message includes the CHO configuration and a CHO execution condition of the candidate cell.
S508: The UE sends an RRC reconfiguration complete message to the source base station, where the RRC reconfiguration complete message indicates that RRC reconfiguration is completed.
S509: The UE evaluates the CHO execution condition of the candidate cell.
S510: If at least one candidate cell meets the CHO execution condition, the UE detaches from the source gNB, synchronizes to a candidate cell of the target base station, and applies a stored corresponding CHO configuration to the selected candidate cell.
S511: The UE sends an RRC reconfiguration complete (RRC reconfiguration complete) message to the target base station, to complete an RRC handover process. Optionally, after the RRC handover process is successfully completed, the UE may release a stored CHO configuration.
S512: The target base station sends a handover success message to the source base station.
S513: The source base station sends sequence number (sequence number, SN) status transfer to the target base station.
S514: The source base station sends a handover cancel message to the another target base station, where the handover cancel message is used to cancel CHO of the UE.

A current standard imposes a restriction on reporting of a flight path update indication message by an uncrewed aerial vehicle. For example, the uncrewed aerial vehicle is allowed to send the flight path update indication message only when the uncrewed aerial vehicle deviates from a predetermined waypoint by more than 50 m or reaches the predetermined waypoint by more than 10 minutes late. However, how the source base station configures a restriction on the flight path update indication message when different base stations have different waypoint deviation tolerance is not considered in existing CHO. In addition, in a conditional handover scenario for the uncrewed aerial vehicle, because the source base station does not know a coverage area of a neighboring base station, candidate target base stations cannot be determined based on a flight path of the uncrewed aerial vehicle. Consequently, the uncrewed aerial vehicle cannot select a target base station from the candidate target base stations to complete CHO.

To resolve the foregoing technical problem, embodiments of this application provide the following solutions.

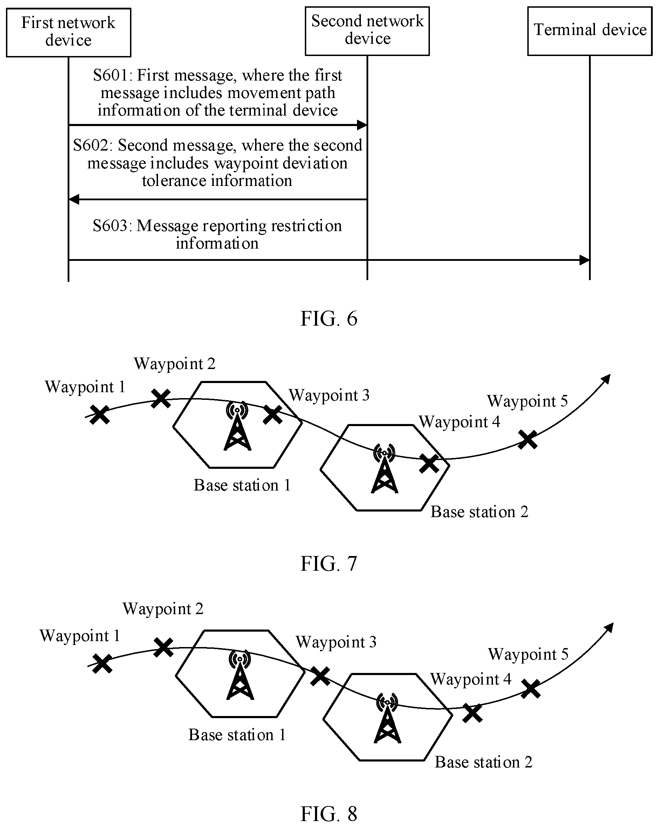

FIG. 6 is a schematic flowchart of a communication method according to an embodiment of this application. In this embodiment of this application, a first network device may be a source base station, a second network device may be one or more neighboring base stations (adjacent to the source base station), and a terminal device may be an uncrewed aerial vehicle. The method includes but is not limited to the following steps.

S601: The first network device sends a first message to the second network device, where the first message includes movement path information of the terminal device.

The first message may be a handover request (handover request) message. The movement path information indicates a movement path (which may also be referred to as a flight path). The movement path may include one or more waypoints. The movement path information may include location information of one or more waypoints that the terminal device is expected to reach. The movement path information may alternatively include a timestamp corresponding to one or more waypoints that are expected to be reached.

Optionally, before the first network device sends the first message to the second network device, the first network device may send measurement control information to the terminal device, where the measurement control information includes a reference signal received quality (i.e. reference signal received power, RSRP) threshold. The terminal device measures, based on the measurement control information, another network device adjacent to the first network device to obtain a measurement report, and sends the measurement report to the first network device. The measurement report may include RSRP of the another network device that is obtained through measurement.

Optionally, before the first network device sends the first message to the second network device, the terminal device may report the movement path information to the first network device.

S602: The second network device sends a second message to the first network device, where the second message includes waypoint deviation tolerance information, and the waypoint deviation tolerance information indicates a distance range within which the terminal device is allowed to deviate from the movement path corresponding to the movement path information.

Specifically, the second network device may determine, based on a coverage area of the second network device and the movement path information, the waypoint deviation tolerance information of the waypoint in the movement path of the terminal device, and then sends the second message to the first network device, where the second message includes the waypoint deviation tolerance information. For example, for a waypoint located in the coverage area of the second network device, the second network device may allow the terminal device to deviate from the movement path by a distance greater than or equal to 0. For a waypoint located outside the coverage area of the second network device, the second network device allows the terminal device to deviate from the movement path by a distance equal to 0 or infinite. The waypoint deviation tolerance information may include the following several cases:
In an implementation, the waypoint deviation tolerance information includes a first waypoint and a first distance threshold, the first waypoint is a waypoint in the movement path, and the first distance threshold is a distance threshold for the terminal device deviating from the first waypoint. It may be understood that the second network device may configure one first distance threshold for each waypoint in the movement path. Optionally, the first waypoint is a waypoint that is in the movement path and that is located in the coverage area of the second network device. It may be understood that the first distance threshold may be configured for a waypoint that is in the movement path and that is located in the coverage area of the second network device, and the first distance threshold does not need to be configured for a waypoint that is in the movement path and that is located outside the coverage area of the second network device. It should be noted that, for a waypoint for which the first distance threshold is not configured, it indicates that the second network device is not interested in the waypoint. In other words, regardless of how far the terminal device deviates from the waypoint in an actual movement process, reporting of movement path update indication information is not triggered.

In another implementation, the waypoint deviation tolerance information includes a second distance threshold, and the second distance threshold is a distance threshold for the terminal device deviating from any waypoint in the movement path. It may be understood that the second network device configures one or more second distance thresholds for the movement path of the terminal device.

Optionally, the second message further includes first indication information, and the first indication information indicates whether the second network device supports serving the terminal device. Specifically, the second network device may determine, based on the coverage area of the second network device and the movement path information, whether the second network device supports serving the terminal device. For example, if any waypoint in the movement path is located outside the coverage area of the second network device, it is determined that the second network device does not support serving the terminal device. If one or more waypoints in the movement path are located in the coverage area of the second network device, it is determined that the second network device supports serving the terminal device. After determining whether the second network device supports serving the terminal device, the second network device sends the second message to the first network device, where the second message includes the first indication information. The first indication information may be represented by one or more bits. For example, one bit is used for representation, where 1 indicates that the second network device supports serving the terminal device, and 0 indicates that the second network device does not support serving the terminal device. 0 and 1 may alternatively indicate opposite cases.

In this embodiment of this application, if the second network device supports serving the terminal device, the second network device may include the following information in the returned second message:
In an implementation, the second message further includes at least one waypoint, and the at least one waypoint is a waypoint that is in the movement path and that is located in the coverage area of the second network device. There may be one or more waypoints in the coverage area of the second network device. For example, FIG. 7 is a diagram of waypoints. A movement path includes waypoint 1 to waypoint 5, where waypoint 3 is located in a coverage area of a base station 1, and waypoint 4 is located in a coverage area of base station 2. It can be learned that both base station 1 and base station 2 support serving the terminal device. Alternatively, the waypoints in the coverage area of the second network device may be a range, represented by a waypoint for entering the coverage area of the second network device and a waypoint for leaving the coverage area of the second network device. For example, the waypoints in the coverage area of the second network device include waypoint 2 and waypoint 5, where waypoint 2 is a waypoint for entering the coverage area of the second network device, and waypoint 5 is a waypoint for leaving the coverage area of the second network device. If there are a plurality of inconsecutive waypoints in the coverage area of the second network device, the plurality of waypoints may be represented by segment, for example, waypoint 2 to waypoint 5, waypoint 7, and waypoint 10 to waypoint 12. Optionally, the plurality of waypoints may alternatively be represented in a sequence of entering the coverage area of the second network device. For example, waypoint 2 to waypoint 5 represent entering the coverage area of the second network device for the first time, waypoint 7 represents entering the coverage area of the second network device for the second time, and waypoint 10 to waypoint 12 represent entering the coverage area of the second network device for the third time.

In another implementation, the second message further includes at least two waypoints and second indication information, and the second indication information indicates that the coverage area of the second network device is between the at least two waypoints. For example, FIG. 8 is another diagram of waypoints. A movement path includes waypoint 1 to waypoint 5. A coverage area of base station 1 is between waypoint 2 and waypoint 3, and a coverage area of base station 2 is between waypoint 3 and waypoint 4. It can be learned that both base station 1 and base station 2 support serving the terminal device.

Optionally, if the second network device does not support serving the terminal device (for example, it is determined that all waypoints in the movement path are located outside the coverage area of the second network device), the second network device may send a handover preparation failure (handover preparation failure) message to the first network device. Optionally, if the second network device does not support serving the terminal device, the second network device may not send any message to the first network device. If the first network device does not receive any message returned by the second network device after sending the first message to the second network device, the first network device may determine that the second network device does not support serving the terminal device.

The second message may be a handover request acknowledge (handover request acknowledge) message. The handover request acknowledge message may include a CHO configuration of the second network device. The CHO configuration may include a cell identifier (identifier, ID), a cell radio network temporary identifier (cell radio network temporary identifier, C-RNTI), a security algorithm ID, a key, and the like of the second network device.

This embodiment of this application may also be applied to a multi-hop scenario. The following describes the multi-hop scenario.

The waypoint deviation tolerance information includes first waypoint deviation tolerance information and second waypoint deviation tolerance information. The first waypoint deviation tolerance information is a distance range in the coverage area of the second network device, within which the terminal device is allowed to deviate from the movement path corresponding to the movement path information. The second waypoint deviation tolerance information indicates a distance range in a coverage area of a third network device, within which the terminal device is allowed to deviate from the movement path corresponding to the movement path information. The second network device is adjacent to the third network device.

After receiving the first message, the second network device may send a third message to the third network device, where the third message includes the movement path information. After receiving the third message, the third network device may determine the second waypoint deviation tolerance information of the waypoint in the movement path of the terminal device based on the coverage area of the third network device and the movement path information. This is the same as a manner in which the second network device determines the first waypoint deviation tolerance information, and details are not described herein again. Then, the third network device sends a fourth message to the second network device, where the fourth message includes the second waypoint deviation tolerance information. The third message may be a handover request message, and the fourth message is a handover request acknowledge message.

After receiving the second waypoint deviation tolerance information, the second network device may send a fifth message to the first network device, where the fifth message includes the second waypoint deviation tolerance information. To be specific, after determining the first waypoint deviation tolerance information, the second network device may first send the first waypoint deviation tolerance information to the first network device by using the first message; and after receiving the second waypoint deviation tolerance information, sends the second waypoint deviation tolerance information to the first network device by using the fifth message. The fifth message may be a handover request acknowledge message. Alternatively, after receiving the second waypoint deviation tolerance information, the second network device sends the first waypoint deviation tolerance information and the second waypoint deviation tolerance information to the first network device by using the first message. To be specific, after determining the first waypoint deviation tolerance information, the second network device waits to receive the second waypoint deviation tolerance information, and finally sends the first waypoint deviation tolerance information and the second waypoint deviation tolerance information together to the first network device.

Further, optionally, if the last waypoint in the movement path is in the coverage area of the third network device, the third network device no longer sends the handover request message to another network device adjacent to the third network device; otherwise, the third network device continues to send the handover request message.

S603: The first network device sends message reporting restriction information to the terminal device, where the message reporting restriction information is used to restrict sending of a movement path update indication message by the terminal device.

Specifically, after receiving the second message sent by one or more second network devices, the first network device may determine the message reporting restriction information based on one or more pieces of received waypoint deviation tolerance information, and then sends the message reporting restriction information to the terminal device. The message reporting restriction information may include: sending the movement path update indication message when a deviation from a predetermined waypoint exceeds 20 meters, or sending the movement path update indication message when the predetermined waypoint is reached more than 10 minutes early or late. Alternatively, the message reporting restriction information may include a distance threshold (for example, 20 meters) or a time threshold (for example, 10 minutes).

Further, the first network device may select one piece of waypoint deviation tolerance information with lowest waypoint deviation tolerance from the plurality of pieces of received waypoint deviation tolerance information as the message reporting restriction information. Alternatively, the first network device may calculate a waypoint deviation tolerance average based on the plurality of pieces of received waypoint deviation tolerance information, and use the waypoint deviation tolerance average obtained through calculation as the message reporting restriction information. Alternatively, the reporting restriction information may be determined in another manner. This is not limited in this application.

The terminal device receives the message reporting restriction information from the first network device, and when a movement status of the terminal device meets the message reporting restriction information, the terminal device sends the movement path update indication message. The movement status may include location information of the terminal device in an actual movement process, or a time point at which the terminal device actually reaches a waypoint.

For example, the movement path indicates that the uncrewed aerial vehicle is expected to reach waypoint 1 in the coverage area of base station 1, but the uncrewed aerial vehicle actually reaches the coverage area of base station 1 with a deviation of 25 meters from waypoint 1. In this case, the message reporting restriction information is met, and the uncrewed aerial vehicle may send the movement path update indication message to request to update the movement path. For another example, the movement path indicates that the uncrewed aerial vehicle is expected to reach waypoint 2 in the coverage area of base station 2 at 13:25, but the uncrewed aerial vehicle actually reaches waypoint 2 in the coverage area of base station 2 at 13:50, which is 25 minutes late. In this case, the message reporting restriction information is met, and the uncrewed aerial vehicle may send the movement path update indication message to request to update the movement path again. Alternatively, the terminal device sends the movement path update indication message when deviating from the predetermined waypoint by more than 20 meters or reaching the predetermined waypoint more than 10 minutes early or late in the actual movement process.

Optionally, after receiving the second message sent by the one or more second network devices, the first network device may further select, from the at least one second network device based on the second message, a candidate target network device for performing conditional handover CHO. Specifically, if the second message sent by the second network device includes the first indication information, and the first indication information indicates that the second network device supports serving the terminal device, the second network device is selected as one candidate target network device; and/or if the second message sent by the second network device includes the at least one waypoint, and the at least one waypoint is a waypoint that is in the movement path and that is in the coverage area of the second network device, the second network device is selected as one candidate target network device; and/or if the second message sent by the second network device includes the at least two waypoints and the second indication information, and the second indication information indicates that the coverage area of the second network device is between the at least two waypoints, the second network device is selected as one candidate target network device.

The first network device may determine a CHO configuration and a CHO trigger condition of each candidate target network device based on the received second message sent by the candidate target network device, and send the CHO configuration and the CHO trigger condition of the candidate target network device to the terminal device. The CHO configuration may include a cell identifier (identifier, ID), a cell radio network temporary identifier (cell radio network temporary identifier, C-RNTI), a security algorithm ID, a key, and the like of the candidate target network device. The CHO trigger condition may include one or more of an RSRP threshold, a location range, and a time range of the candidate target network device. The location range includes a second waypoint and a third waypoint. The second waypoint is a waypoint for entering a coverage area of the candidate target network device, and the third waypoint is a waypoint for leaving the coverage area of the candidate target network device. The time range includes a first time point and first duration, where the first time point is a time point for entering the coverage area of the candidate target network device, and the first duration is duration for entering the coverage area of the candidate target network device.

Finally, the terminal device receives the CHO configuration and the CHO trigger condition of the candidate target network device from the first network device, and performs conditional handover based on the CHO configuration and the CHO trigger condition of the candidate target network device. Specifically, the following several optional manners are included.

In an implementation, if the terminal device enters the coverage area of the candidate target network device and measures that signal quality of the candidate target network device meets a first threshold, the terminal device performs handover from a cell of the source base station to a cell of the candidate target base station through the CHO configuration. The signal quality may be RSRP. The first threshold may be an RSRP threshold.

In another implementation, when the terminal device enters the coverage area of the candidate target network device by passing over the second waypoint (and leaves the coverage area of the candidate target network device without passing over the third waypoint, or leaves the coverage area of the candidate target network device by passing over the third waypoint), and the terminal device measures that the signal quality of the candidate target network device meets the first threshold, the terminal device performs handover from a cell of the first network device to a cell of the candidate target network device through the CHO configuration. In other words, when both the RSRP threshold and the location range of the candidate target network device are met, handover is performed from the cell of the first network device to the cell of the candidate target network device.

In another implementation, when the terminal device enters the coverage area of the candidate target network device at the first time point, and continuously measures, within the first duration, that the signal quality of the candidate target network device meets the first threshold, the terminal device performs handover from a cell of the first network device to a cell of the candidate target network device through the CHO configuration. In other words, when both the RSRP threshold and the time range of the candidate target network device are met, handover is performed from the cell of the first network device to the cell of the candidate target network device.

In another implementation, when the terminal device enters the coverage area of the candidate target network device at the first time point by passing over the second waypoint, and continuously measures, within the first duration, that the signal quality of the candidate target network device meets the first threshold, the terminal device performs handover from a cell of the first network device to a cell of the candidate target network device through the CHO configuration. In other words, when the RSRP threshold, the location range, and the time range of the candidate target network device are all met, handover is performed from the cell of the first network device to the cell of the candidate target network device.

In this embodiment of this application, because different second network devices have different waypoint deviation tolerance for the movement path, the first network device obtains waypoint deviation tolerance information of the different second network devices, to determine the message reporting restriction information and send the message reporting restriction information to the terminal device, so as to meet restrictions of the different second network devices on the movement path update indication message, thereby improving communication flexibility.

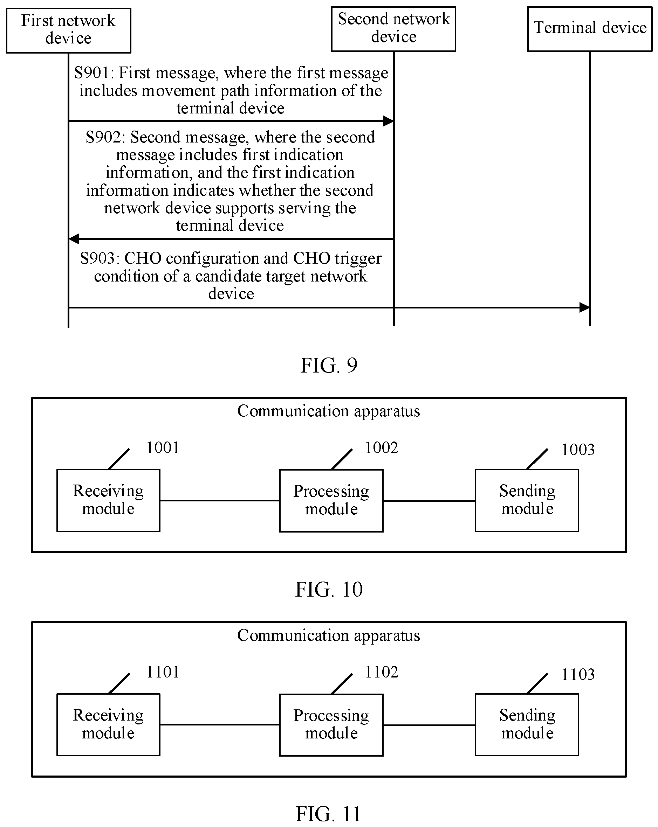

FIG. 9 is a schematic flowchart of a communication method according to an embodiment of this application. In this embodiment of this application, a first network device may be a source base station, a second network device may be one or more neighboring base stations (adjacent to the source base station), and a terminal device may be an uncrewed aerial vehicle. The method includes but is not limited to the following steps.

S901: The first network device sends a first message to the second network device, where the first message includes movement path information of the terminal device.

The first message may be a handover request (handover request) message. The movement path information indicates a movement path (which may also be referred to as a flight path). The movement path may include one or more waypoints. The movement path information may include location information of one or more waypoints that the terminal device is expected to reach. The movement path information may alternatively include a timestamp corresponding to one or more waypoints that are expected to be reached. The movement path information may alternatively include location information of one or more waypoints that the terminal device is expected to reach, and a timestamp corresponding to the one or more waypoints that are expected to be reached.

Optionally, before the first network device sends the first message to the second network device, the first network device may send measurement control information to the terminal device, where the measurement control information includes a reference signal received quality (i.e. reference signal received power, RSRP) threshold. The terminal device measures, based on the measurement control information, another network device adjacent to the first network device to obtain a measurement report, and sends the measurement report to the first network device. The measurement report may include RSRP of the another network device that is obtained through measurement.

Optionally, before the first network device sends the first message to the second network device, the terminal device may report the movement path information to the first network device.

S902: The second network device sends a second message to the first network device, where the second message includes first indication information, and the first indication information indicates whether the second network device supports serving the terminal device.

Specifically, the second network device may determine, based on a coverage area of the second network device and the movement path information, whether the second network device supports serving the terminal device. For example, if any waypoint in the movement path is located outside the coverage area of the second network device, it is determined that the second network device does not support serving the terminal device. If one or more waypoints in the movement path are located in the coverage area of the second network device, it is determined that the second network device supports serving the terminal device. After determining whether the second network device supports serving the terminal device, the second network device sends the second message to the first network device, where the second message includes the first indication information.

In this embodiment of this application, if the second network device supports serving the terminal device, the second network device may include the following information in the returned second message:
In an implementation, the second message further includes at least one waypoint, and the at least one waypoint is a waypoint that is in the movement path and that is located in the coverage area of the second network device. There may be one or more waypoints in the coverage area of the second network device. For example, FIG. 7 is a diagram of waypoints. A movement path includes waypoint 1 to waypoint 5, where waypoint 3 is located in a coverage area of a base station 1, and waypoint 4 is located in a coverage area of base station 2. It can be learned that both base station 1 and base station 2 support serving the terminal device. Alternatively, the waypoints in the coverage area of the second network device may be a range, represented by a waypoint for entering the coverage area of the second network device and a waypoint for leaving the coverage area of the second network device. For example, the waypoints in the coverage area of the second network device include waypoint 2 and waypoint 5, where waypoint 2 is a waypoint for entering the coverage area of the second network device, and waypoint 5 is a waypoint for leaving the coverage area of the second network device. If there are a plurality of inconsecutive waypoints in the coverage area of the second network device, the plurality of waypoints may be represented by segment, for example, waypoint 2 to waypoint 5, waypoint 7, and waypoint 10 to waypoint 12. Optionally, the plurality of waypoints may alternatively be represented in a sequence of entering the coverage area of the second network device. For example, waypoint 2 to waypoint 5 represent entering the coverage area of the second network device for the first time, waypoint 7 represents entering the coverage area of the second network device for the second time, and waypoint 10 to waypoint 12 represent entering the coverage area of the second network device for the third time.

In another implementation, the second message further includes at least two waypoints and second indication information, and the second indication information indicates that the coverage area of the second network device is between the at least two waypoints. For example, FIG. 8 is another diagram of waypoints. A movement path includes waypoint 1 to waypoint 5. A coverage area of base station 1 is between waypoint 2 and waypoint 3, and a coverage area of base station 2 is between waypoint 3 and waypoint 4. It can be learned that both base station 1 and base station 2 support serving the terminal device.

Optionally, if the second network device does not support serving the terminal device (for example, it is determined that all waypoints in the movement path are located outside the coverage area of the second network device), the second network device may send a handover preparation failure (handover preparation failure) message to the first network device. Optionally, if the second network device does not support serving the terminal device, the second network device may not send any message to the first network device. If the first network device does not receive any message returned by the second network device after sending the first message to the second network device, the first network device may determine that the second network device does not support serving the terminal device.

Optionally, the second message may further include waypoint deviation tolerance information, and the waypoint deviation tolerance information indicates a distance range within which the terminal device is allowed to deviate from the movement path corresponding to the movement path information. Specifically, the second network device may determine, based on the coverage area of the second network device and the movement path information, the waypoint deviation tolerance information of the waypoint in the movement path of the terminal device, and then sends the second message to the first network device, where the second message includes the waypoint deviation tolerance information. For example, for a waypoint located in the coverage area of the second network device, the second network device may allow the terminal device to deviate from the movement path by a distance greater than or equal to 0. For a waypoint located outside the coverage area of the second network device, the second network device allows the terminal device to deviate from the movement path by a distance equal to 0 or infinite. The waypoint deviation tolerance information may include the following several cases:
In an implementation, the waypoint deviation tolerance information includes a first waypoint and a first distance threshold, the first waypoint is a waypoint in the movement path, and the first distance threshold is a distance threshold for the terminal device deviating from the first waypoint. It may be understood that the second network device may configure one first distance threshold for each waypoint in the movement path. Optionally, the first waypoint is a waypoint that is in the movement path and that is located in the coverage area of the second network device. It may be understood that the first distance threshold may be configured for a waypoint that is in the movement path and that is located in the coverage area of the second network device, and the first distance threshold does not need to be configured for a waypoint that is in the movement path and that is located outside the coverage area of the second network device. It should be noted that, for a waypoint for which the first distance threshold is not configured, it indicates that the second network device is not interested in the waypoint. In other words, regardless of how far the terminal device deviates from the waypoint in an actual movement process, reporting of movement path update indication information is not triggered.

In another implementation, the waypoint deviation tolerance information includes a second distance threshold, and the second distance threshold is a distance threshold for the terminal device deviating from any waypoint in the movement path. It may be understood that the second network device configures one or more second distance thresholds for the movement path of the terminal device.

The second message may be a handover request acknowledge (handover request acknowledge) message. The handover request acknowledge message may include a CHO configuration of the second network device. The CHO configuration may include a cell identifier (identifier, ID), a cell radio network temporary identifier (cell radio network temporary identifier, C-RNTI), a security algorithm ID, a key, and the like of the second network device.

This embodiment of this application may also be applied to a multi-hop scenario. The following describes the multi-hop scenario.

After receiving the first message, the second network device may send a third message to a third network device, where the third message includes the movement path information. After receiving the third message, the third network device may determine, based on a coverage area of the third network device and the movement path information, whether the third network device supports serving the terminal device. This is the same as a manner in which the second network device determines whether the second network device supports serving the terminal device. Details are not described herein again. If the third network device supports serving the terminal device, the third network device sends a fourth message to the second network device, where the fourth message includes third indication information, and the third indication information indicates that the third network device supports serving the terminal device. If the third network device does not support serving the terminal device, the third network device sends a fourth message to the second network device, where the fourth message includes fourth indication information, and the fourth indication information indicates that the third network device does not support serving the terminal device. Alternatively, if the third network device does not support serving the terminal device, the fourth network device does not send any message, and the second network device may determine, when receiving no message, that the third network device does not support serving the terminal device. The third message may be a handover request message, and the fourth message is a handover request acknowledge message or a handover preparation failure message. The second network device is adjacent to the third network device.

After receiving the third indication information, the second network device may send a fifth message to the first network device, where the fifth message includes the third indication information, and the fifth message is a handover request acknowledge message. In other words, after determining the first indication information, the second network device may first send the first indication information to the first network device by using the first message; and after receiving the third indication information, sends the third indication information to the first network device by using the fifth message. Alternatively, after receiving the third indication information, the second network device sends the first indication information and the third indication information to the first network device by using the first message. In other words, after determining the first indication information, the second network device waits to receive the third indication information, and finally sends the first indication information and the third indication information together to the first network device by using the first message.

Further, optionally, if the last waypoint in the movement path is in the coverage area of the third network device, the third network device no longer sends the handover request message to another network device adjacent to the third network device; otherwise, the third network device continues to send the handover request message.

S903: The first network device sends a CHO configuration and a CHO trigger condition of a candidate target network device to the terminal device.

Specifically, after receiving the second message sent by one or more second network devices, the first network device may select, from the at least one second network device based on the second message, a candidate target network device for performing conditional handover CHO. Specifically, if the second message sent by the second network device includes the first indication information, and the first indication information indicates that the second network device supports serving the terminal device, the second network device is selected as one candidate target network device; and/or if the second message sent by the second network device includes the at least one waypoint, and the at least one waypoint is a waypoint that is in the movement path and that is in the coverage area of the second network device, the second network device is selected as one candidate target network device; and/or if the second message sent by the second network device includes the at least two waypoints and the second indication information, and the second indication information indicates that the coverage area of the second network device is between the at least two waypoints, the second network device is selected as one candidate target network device.

Then, the first network device may determine a CHO configuration and a CHO trigger condition of each candidate target network device based on the received second message sent by the candidate target network device, and send the CHO configuration and the CHO trigger condition of the candidate target network device to the terminal device. The CHO configuration may include a cell identifier (identifier, ID), a cell radio network temporary identifier (cell radio network temporary identifier, C-RNTI), a security algorithm ID, a key, and the like of the candidate target network device. The CHO trigger condition may include one or more of an RSRP threshold, a location range, and a time range of the candidate target network device. The location range includes a second waypoint and a third waypoint. The second waypoint is a waypoint for entering a coverage area of the candidate target network device, and the third waypoint is a waypoint for leaving the coverage area of the candidate target network device. The time range includes a first time point and first duration, where the first time point is a time point for entering the coverage area of the candidate target network device, and the first duration is duration for entering the coverage area of the candidate target network device.

Finally, the terminal device receives the CHO configuration and the CHO trigger condition of the candidate target network device from the first network device, and performs conditional handover based on the CHO configuration and the CHO trigger condition of the candidate target network device. Specifically, the following several optional manners are included.

In an implementation, if the terminal device enters the coverage area of the candidate target network device and measures that signal quality of the candidate target network device meets a first threshold, the terminal device performs handover from a cell of the source base station to a cell of the candidate target base station through the CHO configuration. The signal quality may be RSRP. The first threshold may be an RSRP threshold.

In another implementation, when the terminal device enters the coverage area of the candidate target network device by passing over the second waypoint (and may leave the coverage area of the candidate target network device without passing over the third waypoint, or may leave the coverage area of the candidate target network device by passing over the third waypoint), and the terminal device measures that the signal quality of the candidate target network device meets the first threshold, the terminal device performs handover from a cell of the first network device to a cell of the candidate target network device through the CHO configuration. In other words, when both the RSRP threshold and the location range of the candidate target network device are met, handover is performed from the cell of the first network device to the cell of the candidate target network device.

In another implementation, when the terminal device enters the coverage area of the candidate target network device at the first time point, and continuously measures, within the first duration, that the signal quality of the candidate target network device meets the first threshold, the terminal device performs handover from a cell of the first network device to a cell of the candidate target network device through the CHO configuration. In other words, when both the RSRP threshold and the time range of the candidate target network device are met, handover is performed from the cell of the first network device to the cell of the candidate target network device.

In another implementation, when the terminal device enters the coverage area of the candidate target network device at the first time point by passing over the second waypoint, and continuously measures, within the first duration, that the signal quality of the candidate target network device meets the first threshold, the terminal device performs handover from a cell of the first network device to a cell of the candidate target network device through the CHO configuration. In other words, when the RSRP threshold, the location range, and the time range of the candidate target network device are all met, handover is performed from the cell of the first network device to the cell of the candidate target network device.

Optionally, after receiving the second messages sent by a plurality of second network devices, the first network device may further determine message reporting restriction information based on one or more pieces of waypoint deviation tolerance information of the candidate target network device (excluding the second network device that does not support serving the terminal device), and then sends the message reporting restriction information to the terminal device. The message reporting restriction information may include: sending a movement path update indication message when a deviation from a predetermined waypoint exceeds 20 meters, or sending the movement path update indication message when the predetermined waypoint is reached more than 10 minutes early or late. Alternatively, the message reporting restriction information may include a distance threshold (for example, 20 meters) or a time threshold (for example, 10 minutes).

Further, the first network device may select one piece of waypoint deviation tolerance information with lowest waypoint deviation tolerance from the plurality of pieces of received waypoint deviation tolerance information as the message reporting restriction information. Alternatively, the first network device may calculate a waypoint deviation tolerance average based on the plurality of pieces of received waypoint deviation tolerance information, and use the waypoint deviation tolerance average obtained through calculation as the message reporting restriction information. Alternatively, the reporting restriction information may be determined in another manner. This is not limited in this application.

The terminal device receives the message reporting restriction information from the first network device, and when a movement status of the terminal device meets the message reporting restriction information, the terminal device sends the movement path update indication message. The movement status may include location information of the terminal device in an actual movement process, or a time point at which the terminal device actually reaches a waypoint.

For example, the movement path indicates that the uncrewed aerial vehicle is expected to reach waypoint 1 in the coverage area of base station 1, but the uncrewed aerial vehicle actually reaches the coverage area of base station 1 with a deviation of 25 meters from waypoint 1. In this case, the message reporting restriction information is met, and the uncrewed aerial vehicle may send the movement path update indication message to request to update the movement path. For another example, the movement path indicates that the uncrewed aerial vehicle is expected to reach waypoint 2 in the coverage area of base station 2 at 13:25, but the uncrewed aerial vehicle actually reaches waypoint 2 in the coverage area of base station 2 at 13:50, which is 25 minutes late. In this case, the message reporting restriction information is met, and the uncrewed aerial vehicle may send the movement path update indication message to request to update the movement path again. Alternatively, the terminal device sends the movement path update indication message when deviating from the predetermined waypoint by more than 20 meters or reaching the predetermined waypoint more than 10 minutes early or late in the actual movement process.

In this embodiment of this application, in a CHO scenario, the first network device sends the movement path information to the second network device, and the second network device determines whether the coverage area of the second network device supports serving the terminal device. The first network device determines, based on feedback from the second network device about whether the second network device supports serving the terminal device, a candidate target network device for performing conditional handover, to avoid sending, to the terminal device, a CHO configuration and a CHO handover condition of a network device that does not support serving the terminal device, thereby reducing signaling overheads and improving communication efficiency.

It may be understood that, in the foregoing method embodiments, the methods and operations implemented by the terminal device may alternatively be implemented by a component (for example, a chip or a circuit) that may be used in the terminal device, and the methods and operations implemented by the network device may alternatively be implemented by a component (for example, a chip or a circuit) that may be used in the network device.

In embodiments of this application, functional modules of the terminal device or the network device may be obtained through division based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used. Descriptions are provided below by using an example in which each functional module is obtained through division corresponding to each function.

The foregoing describes in detail the method provided in embodiments of this application with reference to FIG. 6 and FIG. 9. The following describes in detail communication apparatuses provided in embodiments of this application with reference to FIG. 10 and FIG. 11. It should be understood that descriptions of apparatus embodiments correspond to descriptions of method embodiments. Therefore, for content that is not described in detail, refer to the foregoing method embodiments. For brevity, details are not described herein again.

FIG. 10 is a diagram of a structure of a communication apparatus according to an embodiment of this application. The communication apparatus may include a receiving module 1001, a processing module 1002, and a sending module 1003.

Optionally, the communication apparatus may implement steps or procedures performed by the network device corresponding to the foregoing method embodiments. For example, the communication apparatus may be a network device, or a chip or circuit configured in the network device. The receiving module 1001 and the sending module 1003 are configured to perform receiving and sending related operations on a network device side in the foregoing method embodiments. The processing module 1002 is configured to perform processing related operations of the network device in the foregoing method embodiments.

In an embodiment,
the sending module 1003 is configured to send a first message to a second network device, where the first message includes movement path information of a terminal device; and
the receiving module 1001 is configured to receive a second message from the second network device, where the second message includes waypoint deviation tolerance information, and the waypoint deviation tolerance information indicates a distance range within which the terminal device is allowed to deviate from a movement path corresponding to the movement path information.

Optionally, the waypoint deviation tolerance information includes a first waypoint and a first distance threshold, the first waypoint is a waypoint in the movement path, and the first distance threshold is a distance threshold for the terminal device deviating from the first waypoint.

Optionally, the waypoint deviation tolerance information includes a second distance threshold, and the second distance threshold is a distance threshold for the terminal device deviating from any waypoint in the movement path.

Optionally, the processing module 1002 is configured to determine message reporting restriction information based on the waypoint deviation tolerance information; and
the sending module 1003 is configured to send the message reporting restriction information to the terminal device, where the message reporting restriction information is used to restrict sending of a movement path update indication message by the terminal device.

Optionally, the processing module 1002 is configured to select one piece of waypoint deviation tolerance information with lowest waypoint deviation tolerance from a plurality of pieces of received waypoint deviation tolerance information as the message reporting restriction information.

Optionally, the second message further includes first indication information, and the first indication information indicates whether the second network device supports serving the terminal device.

Optionally, the second message further includes at least one waypoint, and the at least one waypoint is a waypoint that is in the movement path and that is in a coverage area of the second network device; or the second message further includes at least two waypoints and second indication information, and the second indication information indicates that the coverage area of the second network device is between the at least two waypoints.

Optionally, the processing module 1002 is configured to select, from at least one second network device based on the second message, a candidate target network device for performing conditional handover CHO.

Optionally, the sending module 1003 is configured to send a CHO configuration and a CHO trigger condition of the candidate target network device to the terminal device.

Optionally, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device.

Optionally, the CHO trigger condition includes a time range, and the time range includes a first time point and first duration, where the first time point is a time point for entering the coverage area of the candidate target network device, and the first duration is duration for entering the coverage area of the candidate target network device.

It should be noted that, for implementations of the modules, refer to corresponding descriptions in the method embodiments shown in FIG. 6 and FIG. 9. The modules perform the methods and the functions performed by the first network device in the foregoing embodiments.

In another embodiment,
the receiving module 1001 is configured to receive a first message from a first network device, where the first message includes movement path information of a terminal device; and
the sending module 1003 is configured to send a second message to the first network device, where the second message includes first waypoint deviation tolerance information, and the first waypoint deviation tolerance information indicates a distance range within which the terminal device is allowed to deviate from a movement path corresponding to the movement path information.

Optionally, the first waypoint deviation tolerance information includes a first waypoint and a first distance threshold, the first waypoint is a waypoint in the movement path, and the first distance threshold is a distance deviating from the first waypoint.

Optionally, the first waypoint deviation tolerance information includes a second distance threshold, and the second distance threshold is a distance for the terminal device deviating from any waypoint in the movement path.

Optionally, the second message further includes first indication information, and the first indication information indicates whether the second network device supports serving the terminal device.

Optionally, the second message further includes at least one waypoint, and the at least one waypoint is a waypoint that is in the movement path and that is in a coverage area of the second network device; or the second message further includes at least two waypoints and second indication information, and the second indication information indicates that the coverage area of the second network device is between the at least two waypoints.

Optionally, the sending module 1003 is further configured to send a third message to a third network device, where the third message includes the movement path information; and the receiving module 1001 is further configured to receive a fourth message from the third network device, where the fourth message includes second waypoint deviation tolerance information, and the second waypoint deviation tolerance information indicates a distance range within which the terminal device is allowed to deviate from the movement path corresponding to the movement path information.

Optionally, the sending module 1003 is further configured to send a fifth message to the first network device, where the fifth message includes the second waypoint deviation tolerance information.

It should be noted that, for implementations of the modules, refer to corresponding descriptions in the method embodiments shown in FIG. 6 and FIG. 9. The modules perform the methods and the functions performed by the first network device and the second network device in the foregoing embodiments.

FIG. 11 is a diagram of a structure of a communication apparatus according to an embodiment of this application. The communication apparatus may include a receiving module 1101, a processing module 1102, and a sending module 1103.

Optionally, the communication apparatus may implement steps or procedures performed by the terminal device corresponding to the foregoing method embodiments. For example, the communication apparatus may be a terminal device, or a chip or circuit configured in the terminal device. The receiving module 1101 and the sending module 1103 are configured to perform receiving and sending related operations on a terminal device side in the foregoing method embodiments. The processing module 1102 is configured to perform processing related operations of the terminal device in the foregoing method embodiments.

The receiving module 1101 is configured to receive message reporting restriction information from a first network device, where the message reporting restriction information is determined based on waypoint deviation tolerance information, and the waypoint deviation tolerance information indicates a distance range within which the terminal device is allowed to deviate from a movement path corresponding to movement path information; and
the sending module 1103 is configured to: when a movement status of the terminal device meets the message reporting restriction information, send a movement path update indication message.

In a possible design, the receiving module 1101 is configured to receive a conditional handover CHO configuration and a CHO trigger condition of a candidate target network device from the first network device, where the candidate target network device is a second network device that supports serving the terminal device; and
the processing module 1102 is configured to perform conditional handover based on the CHO configuration and the CHO trigger condition.

In a possible design, the CHO trigger condition includes a location range, and the location range includes a second waypoint and a third waypoint, where the second waypoint is a waypoint for entering a coverage area of the candidate target network device, and the third waypoint is a waypoint for leaving the coverage area of the candidate target network device.

The processing module 1102 is configured to: when the terminal device enters the coverage area of the candidate target network device by passing over the second waypoint, and the terminal device measures that signal quality of the candidate target network device meets a first threshold, perform handover from a cell of the first network device to a cell of the candidate target network device through the CHO configuration.

In a possible design, the CHO trigger condition includes a time range, and the time range includes a first time point and first duration, where the first time point is a time point for entering the coverage area of the candidate target network, and the first duration is duration for entering the coverage area of the candidate target network device.

The processing module 1102 is configured to: when the terminal device enters the coverage area of the candidate target network device at the first time point, and measures, within the first duration, that the signal quality of the candidate target network device meets the first threshold, perform handover from the cell of the first network device to the cell of the candidate target network device through the CHO configuration.

It should be noted that, for implementations of the modules, refer to corresponding descriptions in the method embodiments shown in FIG. 6 and FIG. 9. The modules perform the methods and the functions performed by the terminal device in the foregoing embodiments.

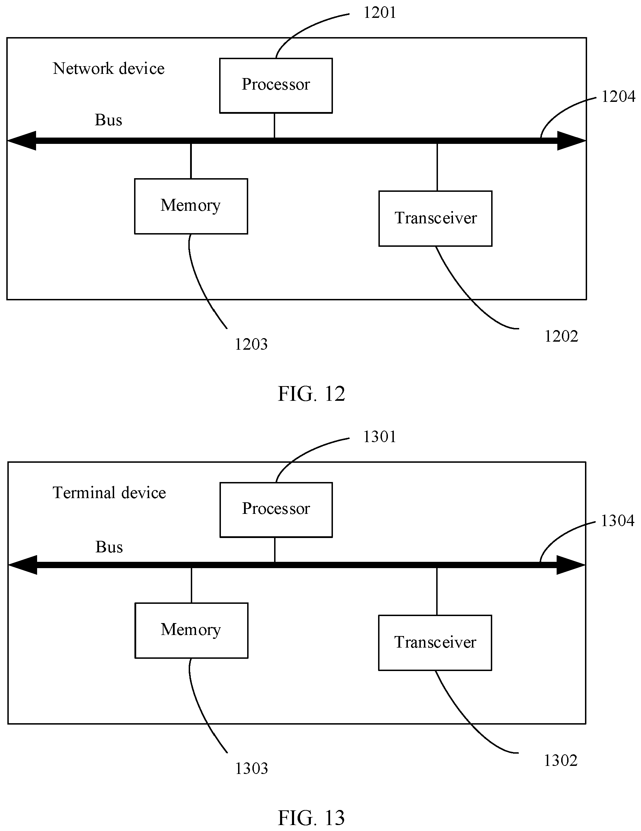

FIG. 12 is a diagram of a structure of a network device according to an embodiment of this application. The network device may be used in the system shown in FIG. 1, to perform functions of the network device in the foregoing method embodiments, or implement steps or procedures performed by the network device in the foregoing method embodiments.

As shown in FIG. 12, the network device includes a processor 1201 and a transceiver 1202. Optionally, the network device further includes a memory 1203. The processor 1201, the transceiver 1202, and the memory 1203 may communicate with each other by using an internal connection path, to transmit a control signal and/or a data signal. The memory 1203 is configured to store a computer program, and the processor 1201 is configured to invoke the computer program from the memory 1203 and run the computer program, to control the transceiver 1202 to receive/send a signal. Optionally, the network device may further include an antenna, configured to send, by using a radio signal, uplink data or uplink control signaling that is output by the transceiver 1202.

The processor 1201 and the memory 1203 may be combined into one processing apparatus, and the processor 1201 is configured to execute program code stored in the memory 1203 to implement the foregoing functions. During specific implementation, the memory 1203 may alternatively be integrated into the processor 1201, or be independent of the processor 1201. The processor 1201 may correspond to the processing module in FIG. 10.

The transceiver 1202 may correspond to the receiving module and the sending module in FIG. 10, and may also be referred to as a transceiver unit or a transceiver module. The transceiver 1202 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the network device shown in FIG. 12 can implement the processes related to the network device in the method embodiments shown in FIG. 6 and FIG. 9. Operations and/or functions of the modules in the network device are intended to implement the corresponding procedures in the foregoing method embodiments. For details, refer to the descriptions in the foregoing method embodiments. To avoid repetition, detailed descriptions are properly omitted herein.

The processor 1201 may be configured to perform an action that is implemented inside the network device and that is described in the foregoing method embodiments. The transceiver 1202 may be configured to perform an action of sending by the network device to the network device or an action of receiving from the network device in the foregoing method embodiments. For details, refer to the descriptions in the foregoing method embodiments. Details are not described herein again.

The processor 1201 may be a central processing unit, a general-purpose processor, a digital signal processor, an application-specific integrated circuit, a field programmable gate array or another programmable logic device, a transistor logic device, a hardware component, or any combination thereof. The processor 1201 may implement or execute various example logical blocks, modules, and circuits described with reference to content disclosed in this application. The processor 1201 may alternatively be a combination for implementing a computing function, for example, a combination including one or more microprocessors or a combination of a digital signal processor and a microprocessor. A communication bus 1204 may be a peripheral component interconnect PCI bus, an extended industry standard architecture EISA bus, or the like. The bus may include an address bus, a data bus, a control bus, and the like. For ease of representation, only one bold line is used in FIG. 12 for representation, but this does not mean that there is only one bus or only one type of bus. The communication bus 1204 is configured to implement connection and communication between these components. The transceiver 1202 in this embodiment of this application is configured to perform signaling or data communication with another node device. The memory 1203 may include a volatile memory, for example, a non-volatile dynamic random access memory (non-volatile random access memory, NVRAM), a phase change random access memory (phase change RAM, PRAM), or a magnetoresistive random access memory (magnetoresistive RAM, MRAM); or may include a non-volatile memory, for example, at least one magnetic disk storage device, an electrically erasable programmable read-only memory (electrically erasable programmable read-only memory, EEPROM), a flash memory like a NOR flash memory (NOR flash memory) or a NAND flash memory (NAND flash memory), or a semiconductor device like a solid-state drive (solid-state drive, SSD). Optionally, the memory 1203 may alternatively be at least one storage apparatus located away from the processor 1201. Optionally, the memory 1203 may further store a group of computer program code or configuration information. Optionally, the processor 1201 may further execute a program stored in the memory 1203. The processor may cooperate with the memory and the transceiver to perform any method and function of the first network device or the second network device in the foregoing embodiments of this application.

FIG. 13 is a diagram of a structure of a terminal device according to an embodiment of this application. The terminal device may be used in the system shown in FIG. 1, to perform functions of the terminal device in the foregoing method embodiments, or implement steps or procedures performed by the terminal device in the foregoing method embodiments.

As shown in FIG. 13, the terminal device includes a processor 1301 and a transceiver 1302. Optionally, the terminal device further includes a memory 1303. The processor 1301, the transceiver 1302, and the memory 1303 may communicate with each other by using an internal connection path, to transmit a control signal and/or a data signal. The memory 1303 is configured to store a computer program, and the processor 1301 is configured to invoke the computer program from the memory 1303 and run the computer program, to control the transceiver 1302 to receive/send a signal. Optionally, the terminal device may further include an antenna, configured to send, by using a radio signal, uplink data or uplink control signaling that is output by the transceiver 1302.

The processor 1301 and the memory 1303 may be combined into one processing apparatus, and the processor 1301 is configured to execute program code stored in the memory 1303 to implement the foregoing functions. During specific implementation, the memory 1303 may alternatively be integrated into the processor 1301, or be independent of the processor 1301. The processor 1301 may correspond to the processing module in FIG. 11.

The transceiver 1302 may correspond to the receiving module and the sending module in FIG. 11, and may also be referred to as a transceiver unit or a transceiver module. The transceiver 1302 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device shown in FIG. 13 can implement the processes related to the terminal device in the method embodiments shown in FIG. 6 and FIG. 9. Operations and/or functions of the modules in the terminal device are intended to implement the corresponding procedures in the foregoing method embodiments. For details, refer to the descriptions in the foregoing method embodiments. To avoid repetition, detailed descriptions are properly omitted herein.

The processor 1301 may be configured to perform an action that is implemented inside the terminal device and that is described in the method embodiments. The transceiver 1302 may be configured to perform an action of sending by the terminal device to the terminal device or an action of receiving from the terminal device in the foregoing method embodiments. For details, refer to the descriptions in the foregoing method embodiments. Details are not described herein again.

The processor 1301 may be processors of various types that are mentioned above. A communication bus 1304 may be a peripheral component interconnect PCI bus, an extended industry standard architecture EISA bus, or the like. The bus may include an address bus, a data bus, a control bus, and the like. For ease of representation, only one bold line is used in FIG. 13 for representation, but this does not mean that there is only one bus or only one type of bus. The communication bus 1304 is configured to implement connection and communication between these components. The transceiver 1302 of the device in this embodiment of this application is configured to perform signaling or data communication with another device. The memory 1303 may be memories of various types that are mentioned above. Optionally, the memory 1303 may alternatively be at least one storage apparatus located away from the processor 1301. The memory 1303 stores a group of computer program code or configuration information, and the processor 1301 executes a program in the memory 1303. The processor may cooperate with the memory and the transceiver to perform any method and function of the terminal device in the foregoing embodiments of this application.

An embodiment of this application further provides a chip system. The chip system includes a processor, configured to support a terminal device or a network device in implementing a function in any one of the foregoing embodiments, for example, generating or processing a broadcast service in the foregoing methods.

In a possible design, the chip system may further include a memory, and the memory is configured to store a computer program and data that are necessary for the terminal device or the network device. The chip system may include a chip, or may include a chip and another discrete device. An input and an output of the chip system respectively correspond to receiving and sending operations of the terminal device or the network device in the method embodiments.

According to the methods provided in embodiments of this application, this application further provides a computer program product. The computer program product includes a computer program, and when the computer program runs on a computer, the computer performs the method in any one of the embodiments shown in FIG. 6 and FIG. 9.

According to the methods provided in embodiments of this application, this application further provides a computer-readable medium. The computer-readable medium stores a computer program, and when the computer program runs on a computer, the computer performs the method in any one of the embodiments shown in FIG. 6 and FIG. 9.

According to the methods provided in embodiments of this application, this application further provides a communication system, including the foregoing one or more terminal devices and the foregoing one or more network devices.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by a first network device, a first message to a second network device, wherein the first message comprises movement path information of a terminal device; and
receiving, by the first network device, a second message from the second network device, wherein the second message comprises waypoint deviation tolerance information, and the waypoint deviation tolerance information indicates a distance range within which the terminal device is allowed to deviate from a movement path corresponding to the movement path information.

2. The method according to claim 1, wherein the waypoint deviation tolerance information comprises a first waypoint and a first distance threshold, the first waypoint is a waypoint in the movement path, and the first distance threshold is a distance threshold for the terminal device deviating from the first waypoint.

3. The method according to claim 1, wherein the waypoint deviation tolerance information comprises a second distance threshold, and the second distance threshold is a distance threshold for the terminal device deviating from any waypoint in the movement path.

4. The method according to any one of claims 1 to 3, wherein the method further comprises:
determining, by the first network device, message reporting restriction information based on the waypoint deviation tolerance information; and
sending, by the first network device, the message reporting restriction information to the terminal device, wherein the message reporting restriction information is used to restrict sending of a movement path update indication message by the terminal device.

5. The method according to claim 4, wherein determining, by the first network device, the message reporting restriction information based on the waypoint deviation tolerance information comprises:
selecting, by the first network device, one piece of waypoint deviation tolerance information with lowest waypoint deviation tolerance from a plurality of pieces of received waypoint deviation tolerance information as the message reporting restriction information.

6. The method according to any one of claims 1 to 5, wherein the second message further comprises first indication information, and the first indication information indicates whether the second network device supports serving the terminal device.

7. The method according to any one of claims 1 to 6, wherein the second message further comprises at least one waypoint, and the at least one waypoint is a waypoint that is in the movement path and that is in a coverage area of the second network device; or the second message further comprises at least two waypoints and second indication information, and the second indication information indicates that the coverage area of the second network device is between the at least two waypoints.

8. The method according to claim 6 or 7, wherein the method further comprises:
selecting, by the first network device, from at least one second network device based on the second message, a candidate target network device for performing conditional handover CHO.

9. The method according to claim 8, wherein the method further comprises:
sending, by the first network device, a CHO configuration and a CHO trigger condition of the candidate target network device to the terminal device.

10. The method according to claim 9, wherein the CHO trigger condition comprises a location range, and the location range comprises a second waypoint and a third waypoint, wherein the second waypoint is a waypoint for entering a coverage area of the candidate target network device, and the third waypoint is a waypoint for leaving the coverage area of the candidate target network device.

11. The method according to claim 9 or 10, wherein the CHO trigger condition comprises a time range, and the time range comprises a first time point and first duration, wherein the first time point is a time point for entering the coverage area of the candidate target network device, and the first duration is duration for entering the coverage area of the candidate target network device.

12. A communication method, wherein the method comprises:
receiving, by a second network device, a first message from a first network device, wherein the first message comprises movement path information of a terminal device; and
sending, by the second network device, a second message to the first network device, wherein the second message comprises first waypoint deviation tolerance information, and the first waypoint deviation tolerance information indicates a distance range within which the terminal device is allowed to deviate from a movement path corresponding to the movement path information.

13. The method according to claim 12, wherein the first waypoint deviation tolerance information comprises a first waypoint and a first distance threshold, the first waypoint is a waypoint in the movement path, and the first distance threshold is a distance for deviating from the first waypoint.

14. The method according to claim 12, wherein the first waypoint deviation tolerance information comprises a second distance threshold, and the second distance threshold is a distance for the terminal device deviating from any waypoint in the movement path.

15. The method according to any one of claims 12 to 14, wherein the second message further comprises first indication information, and the first indication information indicates whether the second network device supports serving the terminal device.

16. The method according to any one of claims 12 to 15, wherein the second message further comprises at least one waypoint, and the at least one waypoint is a waypoint that is in the movement path and that is in a coverage area of the second network device; or the second message further comprises at least two waypoints and second indication information, and the second indication information indicates that the coverage area of the second network device is between the at least two waypoints.

17. The method according to any one of claims 12 to 16, wherein the method further comprises:
sending, by the second network device, a third message to a third network device, wherein the third message comprises the movement path information; and
receiving, by the second network device, a fourth message from the third network device, wherein the fourth message comprises second waypoint deviation tolerance information, and the second waypoint deviation tolerance information indicates a distance range within which the terminal device is allowed to deviate from the movement path corresponding to the movement path information.

18. The method according to claim 17, wherein the method further comprises:
sending, by the second network device, a fifth message to the first network device, wherein the fifth message comprises the second waypoint deviation tolerance information.

19. A communication method, wherein the method comprises:
receiving, by the terminal device, message reporting restriction information from a first network device, wherein the message reporting restriction information is determined based on waypoint deviation tolerance information, and the waypoint deviation tolerance information indicates a distance range within which the terminal device is allowed to deviate from a movement path corresponding to movement path information; and
when a movement status of the terminal device meets the message reporting restriction information, sending, by the terminal device, a movement path update indication message.

20. The method according to claim 19, wherein the method further comprises:
receiving, by the terminal device, a conditional handover CHO configuration and a CHO trigger condition of a candidate target network device from the first network device, wherein the candidate target network device is a second network device that supports serving the terminal device; and
performing, by the terminal device, conditional handover based on the CHO configuration and the CHO trigger condition.

21. The method according to claim 20, wherein the CHO trigger condition comprises a location range, and the location range comprises a second waypoint and a third waypoint, wherein the second waypoint is a waypoint for entering a coverage area of the candidate target network device, and the third waypoint is a waypoint for leaving the coverage area of the candidate target network device; and
performing, by the terminal device, conditional handover based on the CHO configuration and the CHO trigger condition comprises:
when the terminal device enters the coverage area of the candidate target network device by passing over the second waypoint, and the terminal device measures that signal quality of the candidate target network device meets a first threshold, performing, by the terminal device, handover from a cell of the first network device to a cell of the candidate target network device through the CHO configuration.

22. The method according to claim 20 or 21, wherein the CHO trigger condition comprises a time range, and the time range comprises a first time point and first duration, wherein the first time point is a time point for entering the coverage area of the candidate target network device, and the first duration is duration for entering the coverage area of the candidate target network device; and
performing, by the terminal device, conditional handover based on the CHO configuration and the CHO trigger condition comprises:
when the terminal device enters the coverage area of the candidate target network device at the first time point, and measures, within the first duration, that the signal quality of the candidate target network device meets the first threshold, performing, by the terminal device, handover from the cell of the first network device to the cell of the candidate target network device through the CHO configuration.

23. A communication apparatus, comprising a memory and a processor, wherein the memory is configured to store a computer program, and the processor runs the computer program to cause the communication apparatus to perform the method according to any one of claims 1 to 11.

24. A communication apparatus, comprising a memory and a processor, wherein the memory is configured to store a computer program, and the processor runs the computer program to cause the communication apparatus to perform the method according to any one of claims 12 to 18.

25. A communication apparatus, comprising a memory and a processor, wherein the memory is configured to store a computer program, and the processor runs the computer program to cause the communication apparatus to perform the method according to any one of claims 19 to 22.

26. A computer-readable storage medium, wherein the computer-readable storage medium comprises a computer program, and when the computer program runs by a processor, the method according to any one of claims 1 to 22 is implemented.
